# EUROPEAN PATENT APPLICATION

(11) **EP 1 592 025 A1**
(43) Date of publication of application: **02.11.2005**
(21) Application number: 04708465.2
(22) Date of filing: 05.02.2004
(51) Int. Cl.: H01B 13/00, H01B 1/06, H01M 8/02, C08G 77/28

(54) **PROTON CONDUCTING FILM, METHOD FOR PRODUCING THE SAME, AND FUEL CELL USING THE SAME**

(30) Priority: 06.02.2003 JP 2003030000; 25.04.2003 JP 2003122759
(71) Applicant: SEKISUI CHEMICAL CO., LTD., Osaka-shi, Osaka 530-8565 (JP)
(72) Inventor: Nomura, Shigeki, Sekisui Chemical Co., Ltd., Tsukuba-shi, Ibaraki 300-4292 (JP); Yamauchi, Kenji, Sekisui Chemical Co., Ltd., Tsukuba-shi, Ibaraki 300-4292 (JP); Koma, Satoshi, Sekisui Chemical Co., Ltd., Tsukuba-shi, Ibaraki 300-4292 (JP); Sugimoto, Toshiya, Sekisui Chemical Co., Ltd., Tsukuba-shi, Ibaraki 300-4292 (JP); Hasegawa, Taira, Sekisui Chemical Co., Ltd., Tsukuba-shi, Ibaraki 300-4292 (JP)
(74) Representative: Zimmermann, Gerd Heinrich
(86) International application number: PCT/JP2004/001179
(87) International publication number: WO 2004/070738

(57) **Abstract**

A proton conducting membrane having a high ionic conductivity and an excellent high temperature dimensional stability which can perform stably even at high temperatures, a method for producing the same and a solid polymer-based fuel cell comprising same are provided. In other words, the present invention concerns a method for producing a proton conducting membrane having a crosslinked structure formed by a silicon-oxygen covalent bond and having a sulfonic acid-containing crosslinked structure represented by the following formula (1) therein, which comprises a first step of preparing a mixture containing a mercapto group-containing oligomer (A) having a plurality of mercapto groups and a reactive group which can form a Si-O-Si bond by condensation reaction, a second step of forming said mixture into a membrane, a third step of subjecting said membrane-like material to condensation reaction in the presence of a catalyst to obtain a crosslinked gel and a fourth step of oxidizing the mercapto group in the membrane so that it is converted to a sulfonic acid group, a proton conducting membrane obtained by same and a fuel cell comprising same:

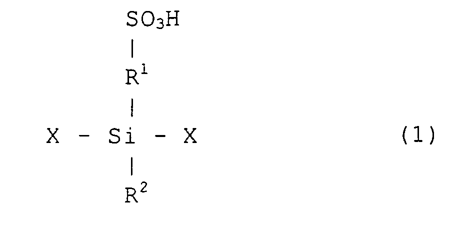

## Description

### <Technical Field>

The present invention relates to a proton conducting membrane, a method for producing the same and a fuel cell using the same and more particularly to a proton conducting membrane excellent in heat resistance, durability, dimensional stability and fuel barrier properties which exhibits an excellent protonic conductivity even at high temperatures, a method for producing the same and a fuel cell which can be adapted for high temperature operation or direct supply of a fuel (e.g., methanol) by using the same.

### <Background Art>

In recent years, fuel cells have been noted as a next-generation electricity-generating apparatus which can make contributions to the solution to environmental problems and energy problems that are socially great assignments because they exhibit a high electricity- generating efficiency and excellent environmental characteristics.

Fuel cells are normally classified into several types by the kind of electrolyte. Among these types of fuel cells, the solid polymer electrolyte fuel cell (hereinafter occasionally referred to as "PEFC") has a small size and gives a high output as compared with any other types of fuel cells and thus is considered to be a main force electric supply of the next generation for use in small-scale on-site units, moving units (e.g., power source for vehicle), portable devices, etc.

PEFC has advantages which are excellent in princile and is now under active development for practical use. PEFC normally uses hydrogen as a fuel. Hydrogen is decomposed by a catalyst disposed on the anode side of PEFC into proton (hydrogen ion) and electron. Among these components, the electron is supplied into the exterior so that it is used as electricity, and then circulated to the cathode side of PEFC. On the other hand, the proton is supplied into a proton conducting membrane (electrolyte membrane) through which it then moves toward the cathode. At the cathode, the proton, the electron thus circulated and oxygen which has been introduced from the exterior are connected to each other by the action of the catalyst to produce water. In other words, as viewed as a simple body, PEFC is a very clean energy source for recovering electricity when water is produced from hydrogen and oxygen.

It is usual that hydrogen is used as a fuel for fuel cell, but a fuel cell is now under active review which uses a fuel other than hydrogen as it is in such a manner that an alcohol, ether, hydrocarbon or the like is directly introduced as a fuel into the fuel cell where proton and electron are taken out of the fuel by the action of a catalyst. A representative example of such a fuel cell is a direct methanol fuel cell (hereinafter occasionally referred to as "DMFC") which uses methanol (normally used in the form of aqueous solution) as a fuel.

Herein, the proton conducting membrane acts to transmit proton produced on the anode to the cathode. As mentioned above, the movement of proton occurs in competition with the flow of electron. In other words, in order to obtain a high output (i.e., high current density), it is necessary that the protonic conduction be conducted in a sufficient amount at a high rate. Accordingly, it is not too much to say that the performance of the proton conducting membrane is a key material that governs the performance of PEFC. Further, the proton conducting membrane not only plays a role in the conduction of proton but also acts as an insulating film for electrically insulating anode and cathode from each other as well as a fuel barrier for preventing the fuel supplied into the anode from leaking to the cathode.

A main proton conducting membrane which is used in PEFC at present is a fluororesin-based membrane having a perfluoroalkylene as a main skeleton and having a perfluorovinylether side chain partly terminated by sulfonic acid group. As such sulfonated fluororesin- based membranes there are known Nafion (trade name) film (produced by Du Pont, Inc.; see US Patent 4,330,654), Dow film (produced by Dow Chemical Inc.; see JP-A-4- 366137), Aciplex (trade name) film (produced by Asahi Kasei Corporation; see JP-A-6-342665), Flemion (trade name) film (produced by ASAHI GLASS COMPANY), etc.

These fluororesin-basedmembranes are said to have a glass transition temperature (Tg) in the vicinity of 130°C under wet conditions where the fuel cell is used. In the vicinity of this temperature, so-called creep occurs. As a result, the protonic conduction structure in the membrane changes, making it impossible to attain stable protonic conduction performance. Further, the membrane is denatured to swollen state which, after prolonged exposure to high temperature, becomes jelly-like and thus can easily break, leading to failure of fuel cell.

For the aforementioned reasons, the current highest temperature at which the fuel cell can be used stably over an extended period of time is normally 80°C.

A fuel cell employs chemical reaction in principle and thus provides a higher energy efficiency when operated at higher temperature. In other words, supposing that the output is fixed, a device which can operate at higher temperature can be reduced more in size and weight. Further, when a fuel cell is operated at high temperature, the resulting waste heat, too, can be made the use of, allowing so-called cogeneration (combined supply of heat and electricity) and hence a drastic enhancement of total energy efficiency. Accordingly, the operating temperature of fuel cell is considered to be somewhat high, normally 100°C or more, particularly preferably 120°C or more.

Further, in the case where the hydrogen to be supplied is not sufficiently purified, it is likely that the catalyst used at the anode can lose its activity (so-called catalyst poisoning) due to impurities in the fuel (e.g., carbonmonoxide), and this is a great problem that governs the life of PEFC. It is known that this catalyst poisoning, too, can be avoided if the fuel cell can be operated at high temperature, and from this standpoint of view, too, it can be said that the fuel cell is preferably operated at higher temperature. Moreover, when the fuel cell can be operated at higher temperature, it is not necessary that as the catalyst itself there be used a pure noble metal such as platinum, which has heretofore been used, making it possible to use an alloy of such a noble metal with various metals to great advantage from the standpoint of cost and resource saving.

On the other hand, various studies of efficient extraction of proton and electron from fuel are now made on direct fuel type fuel cells which operate by direct use of fuel other than hydrogen such as DMFC. It is said that technical problems to be solved to obtain a sufficient output are to enhance the fuel barrier properties of the proton conducting membrane and to operate the fuel cell at high temperature where the catalyst can act effectively.

Thus, since the heat resistance of the proton conducting membrane remains to be 80°C as previously mentioned despite the requirement that PEFC be operated at higher temperature for various reasons, it is the status of quo that the highest allowable operating temperature of PEFC, too, is limited to 80°C.

By the way, the reaction occurring during the operation of a fuel cell is an exothermic reaction, and when a fuel cell is operated, the temperature in PEFC rises spontaneously. However, since Nafion, which is a representative proton conducting membrane that is used at present, has only heat resistance up to about 80°C, it is necessary that PEFC be cooled so that the temperature doesn't reach 80°C. Cooling is normally carried out by water cooling method, and the separator portion of PEFC is devised for such cooling. When such a cooling unit is employed, the entire system of PEFC has a raised size and weight, making it impossible to make sufficient use of the original characteristics of PEFC which are small size and light weight. In particular, when the limit of operation temperature is 80°C, water cooling system, which is the simplest cooling system, can difficultly make effective cooling. If operation at 100°C or more is made possible, effective cooling can be made by releasing the evaporation heat of water, and when water is circulated, the amount of water to be used in cooling can be drastically reduced, making it possible to attain the reduction of size and weight of the device. In particular, in the case where PEFC is used as an energy source for vehicle, the comparison of the system involving the temperature control to 80°C with the system involving the temperature control to 100°C or more shows that the volume of radiator and cooling water can be drastically reduced, and it has been keenly desired to provide PEFC which can operate at 100°C or more, i.e., proton conducting membrane having a heat resistance of 100°C or more.

As mentioned above, although it has been desired to allow high temperature operation of PEFC, that is, provide a proton conducting membrane with resistance to high temperature from various standpoints of view such as electricity-generating efficiency, cogeneration efficiency, cost, resource saving and cooling efficiency, there is present no proton conducting membrane having both sufficient protonic conductivity and heat resistance.

Under these circumstances, various heat-resistant proton conducting materials have been studied and proposed to raise the operating temperature of PEFC.

A representative example of these proton conducting materials is a heat-resistant aromatic polymer material that substitutes for related art fluorine-based membranes. Examples of such a heat-resistant aromatic polymer material include polybenzimidazoles (see JP-A-9-110982), polyethersulfones (see JP-A-10-21943 and JP-A-10-45913), polyether ether ketones (see JP-A-9-87510), etc.

These aromatic polymer materials are advantageous in that they show little structural change at high temperatures. However, most of these aromatic polymer materials have sulfonic acid groups, carboxylic acid groups, etc. directly incorporated in its aromatic group. These aromatic polymer materials can undergo remarkable desulfonation and decarbonation at high temperatures and thus are not suitable for operation at high temperatures.

Further, most of these aromatic polymer materials have no ion channel structure (described later) as in fluororesin-based membranes and thus are disadvantageous in that the provision of sufficient protonic conductivity requires the introduction of a large number of acid groups that deteriorate the heat resistance or hot water resistance thereof and cause the dissolution thereof by hot water in some cases. Moreover, when water is present, the entire membrane tends to swell greatly similarly to fluororesin-based membranes. The change of membrane size from dried state to wet state causes the application of stress to the junction of the membrane-electrode assembly, making it much likely that the membrane and the electrode can be separated from each other at the junction or the membrane can break. It is further disadvantageous in that the wet membrane can break due to the reduction of strength. Moreover, all these aromatic polymer materials are rigid polymer compounds when dried and thus are disadvantageous in that the membrane can undergo breakage or the like during the formation of the membrane-electrode assembly.

In order to solve these problems, methods for introducing these electrolytes into a porous resin have been studied (see US Patent 6,242,135). In this case, the film strength and dimensional stability can be drastically improved, but the proton conducting membrane used remains the same as ever and the essential improvement of heat stability leaves something to be desired.

On the other hand, as proton conducting materials there have been proposed the following inorganic materials. For example, Minami et la obtained a proton conducting inorganic material by adding various acids to a hydrolyzable silyl compound (see "Solid State Ionics", Vol. 74, page 105, 1994). Although these inorganic materials exhibit a stable protonic conductivity even at high temperatures, they can easily crack when formed in a thin film, making itself difficult to handle or making it difficult to prepare a membrane- electrode assembly.

In order to solve these problems, a method which comprises crushing aproton conducting inorganicmaterial, and then mixing it with an elastomer (see JP-A-8-249923), a method which comprises mixing it with a sulfonic acid group-containing polymer (see JP-A-10-69817), etc. have been attempted, but since these methods merely involve the mixing of a polymer material as binder with an inorganic crosslinked material, there occurs no great difference in basic thermal physical properties from single polymer material, causing a structural change of the polymer material. As a result, no stable protonic conductivity is developed, and in many cases, the protonic conductivity thus developed is not so high.

Although researches and developments have thus been made on various electrolyte membrane materials to solve the problems with the related art solid polymer electrolyte fuel cells, it is the status of quo that there have never been present a proton conducting membrane which exhibits a sufficient durability at high temperatures (e.g., 100°C or more) and satisfies various physical properties such as mechanical properties.

On the other hand, DMFC, which uses methanol as a fuel instead of hydrogen, causes methanol to come in direct contact with the membrane. Sulfonated fluororesin-based membranes such as Nafion (trade name) which are currently used have a high affinity for methanol and thus, when impregnated with methanol, undergoes extreme swelling and, in some cases, dissolution, causing failure of the fuel cell. Further, methanol leaks to the oxygen electrode, drastically reducing the output of the fuel cell. This problem arises also with an electrolyte membrane containing an aromatic ring. Thus, for DMFC, too, no efficient and durable membrane has ever been present.

### <Disclosure of the Invention>

An object of the present invention is to provide a proton conducting membrane which is excellent in heat resistance, durability, dimensional stability, fuel barrier properties, etc. and exhibits an excellent protonic conductivity even at high temperatures, a method for producing the same and a fuel cell which can cope with high temperature operation or direct fuel supply (e.g., methanol) by using this proton conducting membrane for the purpose of solving the problems with the related art solid polymer type fuel cell.

The present inventors made extensive studies in the light of the aforementioned problems. As a result, it was found that a proton conducting membrane having a crosslinked structure formed by silicon-oxygen covalent bond in its main skeleton and a sulfonic acid- containing crosslinked structure as an acid group is effective. Further, a number of experiments were made in the production of such a proton conducting membrane. As a result, it was found that a good proton conducting membrane can be obtained by subjecting an oligomer having a plurality of mercapto groups (hereinafter referred to as "mercapto group-containing oligomer (A)") as a main raw material optionally blended with a micropore-forming agent (B), an organic-inorganic composite crosslinking agent (F), a hydrolyzable silyl compound (G) or a siloxane oligomer (H) which are arbitrary components to condensation reaction in the presence of a catalyst to obtain a gel, forming the gel into a film, and, if the micropore-forming agent (B) has been added, removing the micropore-forming agent (B) and then oxidizing the mercapto groups. The present invention has been thus worked out.

In other words, in accordance with the first invention of the present invention, there is provided a method for producing a proton conducting membrane having a crosslinked structure formed by a silicon-oxygen covalent bond and having a sulfonic acid-containing crosslinked structure represented by the following formula (1) therein, which comprises a first step of preparing a mixture containing a mercapto group-containing oligomer (A) having a mercapto group and a reactive group which can form a Si-O-Si bond by condensation reaction, a second step of forming saidmixture into a membrane, a third step of subjecting said membrane-like material to condensation reaction in the presence of a catalyst to obtain a crosslinked gel and a fourth step of oxidizing the mercapto group in the membrane so that it is converted to a sulfonic acid group: 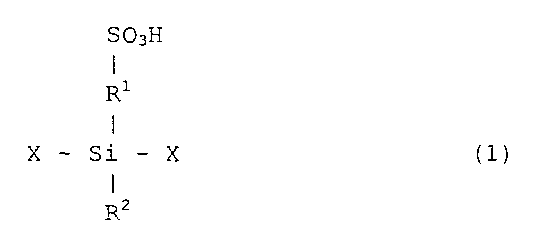 wherein X represents -O- bond taking part in crosslinking or OH group; R¹ represents an alkylene group having 20 or less carbon atoms; R² represents any of CH₃, C₂H₅, C₃H₇, C₄H₉, C₆H₅, OH and -O- bond taking part in crosslinking; and R¹ and R² each may be mixture of different substituents.

Further, in accordance with the second invention of the present invention, there is provided the method for producing a proton conductingmembrane as described in the first invention, wherein the mercapto group-containing oligomer (A) has a plurality of mercapto groups.

Further, in accordance with the third invention of the present invention, there is provided the method for producing a proton conductingmembrane as described in the first invention, wherein the mercapto group-containing oligomer (A) is a compound represented by the following formula (5): 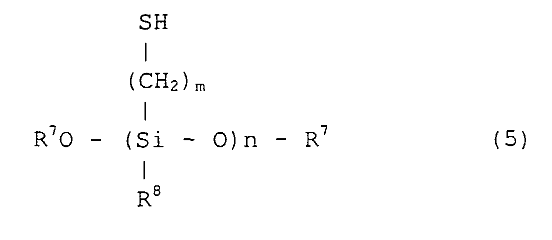 wherein R⁷ represents a group selected from the group consisting of H, CH₃, C₂H₅, C₃H₇ and C₄H₉; R⁸ represents a group selected from the group consisting of CH₃, C₂H₅, C₃H₇, C₄H₉, C₆H₅, OH, OCH₃, OC₂H₅, OC₃H₇ and OC₄H₉; m represents an integer of from 1 to 20; n represents an integer of from 2 to 100; R⁸ may be a mixture of the same or different substituents; and R⁸ may have a branched structure which is partially a -OSi bond or an intramolecular annular structure.

Further, in accordance with the fourth invention of the present invention, there is provided the method for producing a proton conductingmembrane as described in the third invention, wherein in the formula (5), R⁸ is any of OH, OCH₃, OC₂H₅ and O-Si bond, m is 3 and n is an integer of from 3 to 50.

Further, in accordance with the firth invention of the present invention, there is provided the method for producing aproton conductingmembrane as described in the first invention, wherein the mercapto group-containing oligomer (A) is a compound represented by the following formula (6): 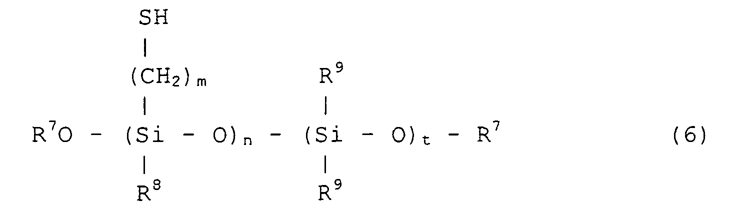 wherein R⁷ represents a group selected from the group consisting of H, CH₃, C₂H₅, C₃H₇ and C₄H₉; R⁸ represents a group selected from the group consisting of CH₃, C₂H₅, C₃H₇, C₄H₉, C₆H₅, OH, OCH₃, OC₂H₅, OC₃H₇ and OC₄H₉; R⁹ represents a group selected from the group consisting of OH, OCH₃, OC₂H₅, OC₃H₇, OC₄H₉, CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅; m represents an integer of from 1 to 20; n represents an integer of from 1 to 100; t represents an integer of from 1 to 100; R⁸ and R⁹ each may be a mixture of the same or different substituents; R⁸ and R⁹ each may be a branched structure which is partially a -OSi bond or an annular structure; and the unit containing a mercapto group and the unit containing R⁹ may exist in block or random form.

Further, in accordance with the sixth invention of the present invention, there is provided the method for producing a proton conducting membrane as described in the fifth invention, wherein in the formula (6), n represents an integer of from 2 to 100.

Further, in accordance with the seventh invention of the present invention, there is provided the method for producing aproton conductingmembrane as described in the fifth invention, wherein in the formula (6), R⁸ represents any of OH, OCH₃, OC₂H₅ and O-Si bond, R⁹ represents any of OH, OCH₃, OC₂H₅ and O-Si bond, m is 3, and the sum of n and t is an integer of from not smaller than 3 to not greater than 50.

Further, in accordance with the eighth invention of the present invention, there is provided the method for producing aproton conducting membrane as described in the first invention, wherein the mercapto group-containing oligomer (A) is produced by the hydrolytic condensation of a composition containing a mercapto group-containing alkoxysilane (C) represented by the following chemical formula (2):

(R³)ₜ(R⁴)ₘSi-(CH₂)ₙ-SH (2)

wherein R³ represents a group selected from the group consisting of CH₃, C₂H₅, C₃H₇, C₄H₉ and C₆H₅; R⁴ is a group selected from the group consisting of OCH₃, OC₂H₅, OC₃H₇ and OC₄H₉; t represents an integer of 0 or 1; m represents an integer of 2 or 3; the sum of m and t is 3; and n represents an integer of from 1 to 20.

Further, in accordance with the ninth invention of the present invention, there is provided the method for producing aproton conductingmembrane as described in the eighth invention, wherein in the formula (2), R⁴ represents OCH₃ or OC₂H₅, t is 0, and m is 3.

Further, in accordance with the tenth invention of the present invention, there is provided the method for producing a proton conducting membrane as described in the eighth invention, wherein in the formula (2), R³ represents CH₃, R⁴ represents OCH₃ or OC₂H₅, t is 1, and m is 2.

Further, in accordance with the eleventh invention of the present invention, there is provided the method for producing a proton conducting membrane as described in the eighth invention, wherein in the formula (2), n is 3.

Further, in accordance with the twelfth invention of the present invention, there is provided the method for producing a proton conductingmembrane as described in the fifth invention, wherein the starting material composition of themercapto group-containing oligomer (A) further contains at least one hydrolyzable silyl compound (D) represented by the following chemical formula (3):

Si(R⁵)₄ (3)

wherein R⁵ represents a group selected from the group consisting of Cl, OH, OCH₃, OC₂H₅, OC₃H₇, OC₄H₉ and OCOCH₃.

Further, in accordance with the thirteenth invention of the present invention, there is provided the method for producing a proton conducting membrane as described in the twelfth invention, wherein in the formula (3), R⁵ is any of OCH₃ and OC₂H₅.

Further, in accordance with the fourteenth invention of the present invention, there is provided the method for producing a proton conducting membrane as described in the fifth invention, wherein the starting material composition of the mercapto group-containing oligomer (A) further contains at least one hydrolyzable silyl compound (E) represented by the following chemical formula (4):

(R⁵)ₘ(R⁶)ₙSi (4)

wherein R⁵ represents a group selected from the group consisting of Cl, OH, OCH₃, OC₂H₅, OC₃H₇, OC₄H₉ and OCOCH₃, R6 represents a group selected from the group consisting of CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅, m represents an integer of 2 or 3; and n represents an integer or 1 or 2, with the proviso that the sum of m and n is 4.

Further, in accordance with the fifteen invention of the present invention, there is provided the method for producing a proton conducting membrane as described in the first invention, wherein the first step further involves the blending of at least one hydrolyzable silyl compound (G) represented by the following formula (9):

(R⁵)ₘ(R⁶)ₙSi (9)

wherein R⁵ represents a group selected from the group consisting of Cl, OH, OCH₃, OC₂H₅, OC₃H₇, OC₄H₉ and OCOCH₃, R6 represents a group selected from the group consisting of CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅, m represents an integer of from 1 to 4; and n represents an integer or from 0 to 3, with the proviso that the sum of m and n is 4.

Further, in accordance with the sixteenth invention of the present invention, there is provided the method for producing a proton conducting membrane as described in the fifteenth invention, wherein in the formula (9), R⁵ represents OCH₃ or OC₂H₅, R⁶ represents CH₃, m represents an integer of 3 or 4, and n represents an integer of 0 or 1, with the proviso that the sum of m and n is 4.

Further, in accordance with the seventeen invention of the present invention, there is provided the method for producing a proton conducting membrane as described in the fifteen invention, wherein in the formula (9), R⁵ represents OCH₃ or OC₂H₅, m is 4, and n is 0.

Further, in accordance with the eighteenth invention of the present invention, there is provided the method for producing aproton conductingmembrane as described in the first invention, wherein the first step further involves the blending of at least one siloxane oligomer (H) represented by the following formula (10) : 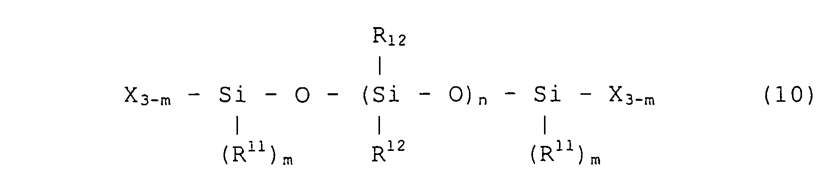 wherein X represents a group selected from the group consisting of Cl, OCH₃, OC₂H₅, OC₃H₇, OC₄H₉, OH and OCOCH₃; R¹¹ represents a group selected from the group consisting of CH₃, C₂H₅, C₃H₇, C₄H₉ and C₆H₅; R¹² represents a group selected from the group consisting of Cl, OH, OCH₃, OC₂H₅, OC₃H₇, OC₄H₉, OCOCH₃, CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅; R¹² may be a mixture of the same or different substituents; R¹² may have a branched structure which is partially a -OSi bond or an intramolecular annular structure; m represents an integer of from 0 to 2; and n represents an integer of from 1 to 100.

Further, in accordance with the nineteenth invention of the present invention, there is provided the method for producing a proton conductingmembrane as described in the first invention, wherein the first step further involves the blending of at least one organic-inorganic composite crosslinking agent (F) represented by the following formula (7): 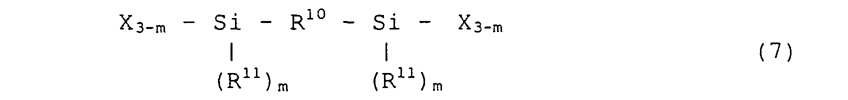 wherein X represents a group selected from the group consisting of Cl, OCH₃, OC₂H₅, OC₃H₇, OC₄H₉ and OH; R¹⁰ represents a C₁-C₃₀ carbon atom-containing molecular chain group; R¹¹ represents a group selected from the group consisting of CH₃, C₂H₅, C₃H₇, C₄H₉ and C₆H₅; and m represents an integer of 0, 1 or 2.

Further, in accordance with the twentieth invention of the present invention, there is provided the method for producing a proton conducting membrane as described in the nineteenth invention, wherein in the formula (7), X represents OCH₃ or OC₂H₅, R¹⁰ represents an alkylene chain represented by the following formula (8), and R¹¹ represents CH₃:

-(CH₂)ₙ- (8)

wherein n represents an integer of from 1 to 30.

Further, in accordance with the twenty first invention of the present invention, there is provided the method for producing a proton conducting membrane as described in any one of the fifteenth to twentieth, wherein the total added amount of at least one compound selected from the group consisting of organic-inorganic composite crosslinking agent (F), hydrolyzable metal compound (G) and siloxane oligomer (H) is 200 parts by weight or less based on 100 parts by weight of the mercapto group-containing oligomer (A).

Further, in accordance with the twenty second invention of the present invention, there is provided the method for producing a proton conducting membrane as described in the first invention, wherein at the third step, the catalyst is a Bronsted acid.

Further, in accordance with the twenty third invention of the present invention, there is provided the method for producing a proton conducting membrane as described in the first invention, wherein at the third step, the catalyst is a basic catalyst.

Further, in accordance with the twenty fourth invention of the present invention, there is provided the method for producing a proton conducting membrane as described in the twenty third invention, wherein the basic catalyst is an organic amine.

Further, in accordance with the twenty fifth invention of the present invention, there is provided the method for producing a proton conducting membrane as described in the twenty fourth invention, wherein the organic amine is at least one compound selected from the group consisting of triethylamine, dipropylamine, isobutylamine, diethylamine, diethylethanolamine, triethanolamine, pyridine and piperazine.

Further, in accordance with the twenty sixth invention of the present invention, there is provided the method for producing a proton conducting membrane as described in any one of the twenty second to twenty fifth inventions, wherein at the third step, as the catalyst there is additionally used at least one compound selected from the group consisting of potassium fluoride and ammonium fluoride.

Further, in accordance with the twenty seventh invention of the present invention, there is provided the method for producing a proton conducting membrane as described in the first invention, wherein the first step further involves the blending of an oxidatively degradable, water-soluble or hydrolyzable micropore-forming agent (B) and the third step is followed by a step of removing the micropore-forming agent (B) from the membrane-like gel by oxidative degradation, dissolution or hydrolysis to form micropores in the surface and interior of the membrane.

Further, in accordance with the twenty eighth invention of the present invention, there is provided the method for producing a proton conducting membrane as described in the twenty seventh invention, wherein the micropore-forming agent (B) is a liquid water-soluble organic compound.

Further, in accordance with the twenty ninth invention of the present invention, there is provided the method for producing a proton conducting membrane as described in the twenty eighth invention, wherein the micropore-forming agent (B) is a polyoxyalkylene.

Further, in accordance with the thirtieth invention of the present invention, there is provided the method for producing a proton conducting membrane as described in the twenty ninth invention, wherein the micropore-forming agent (B) is a polyethylene glycol having an average molecular weight of from 100 to 600.

Further, in accordance with the thirty first invention of the present invention, there is provided the method for producing a proton conducting membrane as described in the twenty seventh invention, wherein the blended amount of the micropore-forming agent (B) is from 3 to 150 parts by weight based on 100 parts by weight of the mercapto group-containing oligomer (A).

Further, in accordance with the thirty second invention of the present invention, there is provided the method for producing a proton conducting membrane as described in the twenty seventh invention, wherein the step of removing the micropore-forming agent (B) from the membrane-like gel by oxidative degradation, dissolution or hydrolysis is effected at the same time with the fourth step.

Further, in accordance with the thirty third invention of the present invention, there is provided a method for producing a proton conducting membrane having a crosslinked structure formed by a silicon-oxygen covalent bond and having a sulfonic acid-containing crosslinked structure represented by the following formula (1) therein, which comprises a first step of oxidizing a mercapto group- containing oligomer (A) having a mercapto group and a reactive group which can form a Si-O-Si bond by condensation reaction to prepare a mixture containing a sulfonic acid group-containing oligomer (S) having at least 20 atom-% of mercapto groups in the mercapto group-containing oligomer (A) oxidized to sulfonic acid, a second step of forming said mixture into a membrane and a third step of subjecting said membrane-like material to condensation reaction in the presence of a catalyst to obtain a crosslinked gel: 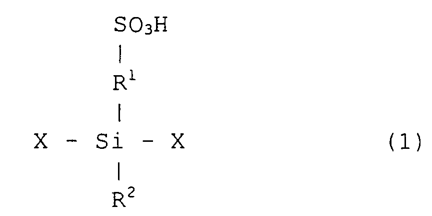 wherein X represents -O- bond taking part in crosslinking or OH group; R¹ represents an alkylene group having 20 or less carbon atoms; R² represents any of CH₃, C₂H₅, C₃H₇, C₆H₅, OH and -O- bond taking part in crosslinking; and R¹ and R² each may be mixture of different substituents.

Further, in accordance with the thirty fourth invention of the present invention, there is provided the method for producing a proton conducting membrane as described in the thirty third invention, wherein the total added amount of at least one compound selected from the group consisting of organic-inorganic composite crosslinking agent (F), hydrolyzable metal compound (G) and siloxane oligomer (H) is 200 parts or less by weight based on 100 parts by weight of the sulfonic acid group-containing oligomer (S).

Further, in accordance with the thirty fifth invention of the present invention, there is provided a proton conducting membrane obtained by a production process as described in any one of the first to thirty fourth inventions.

Further, in accordance with the thirty sixth invention of the present invention, there is provided a fuel cell comprising a proton conducting membrane as described in the thirty fifth invention.

### <Brief Description of the Drawings>

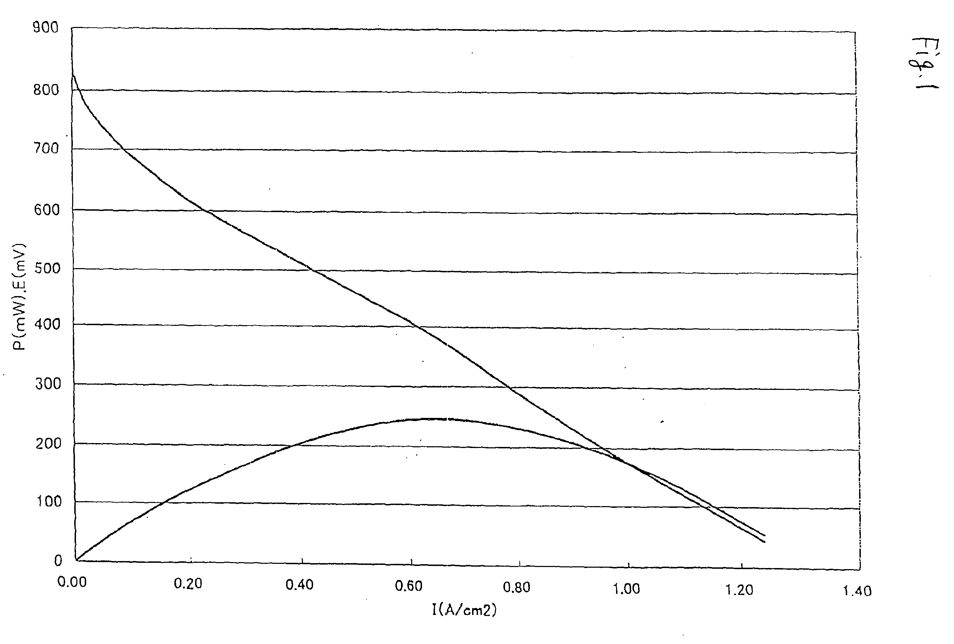

Fig. 1 is a diagram of voltage-current properties of a proton conducting membrane produced in Example 21.

### <Best Mode for Carrying Out the Invention>

The proton conducting membrane of the present invention, the method for producing the same and the fuel cell comprising same will be each further described below.

### 1. Proton conducting membrane

In the proton conducting membrane of the present invention, the crosslinked structure is an important constituent factor which plays a role of providing the membrane with mechanical strength, heat resistance, durability, dimensional stability, etc.

Neither related art fluororesin-based membranes nor proton conducting membranes made of a polymer material having an aromatic molecular structure in its main chain have a crosslinked structure. Therefore, at high temperatures, these membranes show a drastic structural change due to creep or the like, resulting in the instabilization of the operation of the fuel cell at high temperatures.

For example, Nafion (trade name) film (produced by Du Pont, Inc.), which is a representative example of fluororesin-based films, is a flexible film which can withstand drying but swells drastically when wet. When there is such a great difference in film dimension between when dried and when wet, it not only makes it difficult to produce a membrane-electrode assembly (hereinafter occasionally referred to as "MEA") but also causes the membrane to expand and shrink always according to the change of temperature and humidity in the interior of the fuel cell due to the change of operating state during the operation of the fuel cell, making it likely that the membrane can break or MEA can be destroyed. Further, when wet, the membrane becomes weakened, making it likely that the membrane can undergo breakage or the like not only due to the aforementioned dimensional change but also when there occurs a pressure difference in the fuel cell.

When continuously given a temperature as high as about 150°C over an extended period of time while being moistened, Nafion film becomes jelly-like and breaks down and thus cannot be used as a membrane for fuel cell. Further, even at a temperature of about 120°C, Nafion film undergoes denaturation to swollen state due to creep. Once denatured, Nafion film becomes hard and brittle and thus can break or crack and cause destruction of membrane-electrode assembly when dried due to the change of the operating state of the fuel cell. This similarly occurs with membranes having an aromatic molecular structure in its main chain.

However, these problems can be solved by introducing a crosslinked structure. In some detail, when a crosslinked structure is introduced, there occurs no drastic dimensional change and even no change of strength regardless of whichever the membrane is wet or dried.

In order to form such a crosslinked structure, an organic polymer-based material such as epoxy resin, crosslinkable acrylic resin, melamine resin and unsaturated polyester resin may be used, but it is difficult for the membrane to exhibit a prolonged stability when exposed to high temperature and high humidity under strong acid (containing proton) conditions as in membrane for fuel cell.

On the other hand, a crosslinked structure formed by a metal-oxygen bond such as silicon-oxygen bond, aluminum-oxygen bond, titanium-oxygen bond and zirconium-oxygen bond is relatively inert even in such a strong acid and high temperature and humidity atmosphere and thus can be preferably used as a crosslinked structure in the interior of membrane for fuel cell. In particular, silicon-oxygen bond can be easily available at reduced cost and thus can be preferably used.

As the crosslinked structure of the present invention there may be used mainly silicon-oxygen bond, but a bond of aforementioned metal other than silicon to oxygen or phosphorus-oxygen bond, boron-oxygen bond or the like may be used in combination with silicon-oxygen bond so far as the cost or ease of production cannot be sacrificed. In the case where "bond of metal other than silicon to oxygen", "phosphorus-oxygen bond", "boron-oxygen bond" or the like is used in combination with silicon-oxygen bond, the proportion of silicon-oxygen bond in the crosslinked structure is not specifically limited, but the atomic ratio of "silicon" and "elements other than silicon bonded to oxygen (metal other than silicon, phosphorus, boron, etc.)" is normally 50 mol-% or more, preferably 70 mol-% or more, more preferably 80 mol-% or more based on 100 mol-% of all the metal atoms.

In order that the proton conducting membrane exhibits a high conductivity and good heat resistance, durability, dimensional stability and fuel barrier properties, it is preferred that the following requirements be satisfied.
1) Sulfonic acid groups must be present in a high concentration.
2) The crosslink density must be enhanced.

In the light of these requirements, the proton conducting membrane of the present invention has a sulfonic acid group-containing crosslinked structure of the formula (1) shown below. 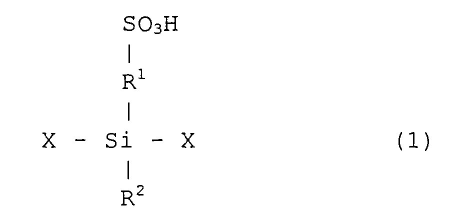 wherein X represents -O- bond taking part in crosslinking or OH group; R¹ represents an alkylene group having 20 or less carbon atoms; R² represents any of CH₃, C₂H₅, C₃H₇, C₄H₉, C₆H₅, OH and -O- bond taking part in crosslinking; and R¹ and R² each may be mixture of different substituents.

The crosslinked structure formed by silicon-oxygen covalent bond is a main constituent of the proton conducting membrane of the present invention, and a part of the silicon atom-containing compound constituting the crosslinked structure is characterized by the covalent bonding of sulfonic acid groups to silicon atom via alkylene group.

In order to realize high conductivity, it is preferred to introduce sulfonic acid groups into the membrane in a high concentration. Further, in order to realize heat resistance, it is preferred to realize a high crosslink density. As a structure allowing the realization of such a high sulfonic acid and a high crosslink density there is preferably used a structure of the formula (1). The structure of the formula (1) has one sulfonic acid group in the unit structure and a silicon atom connected to the crosslinked structure, and the crosslinked structure is formed while keeping the sulfonic acid group concentration. Such a structure of the formula (1) can be realized by the use of a sulfonic acid group-containing alkoxysilane compound such as 3-trihydroxysilylpropanesulfonic acid or a sulfonic acid group precursor-containing material (e.g., mercapto group-containing alkoxysilane compound such as 3-mercaptopropyltrimethoxysilane).

Further, in the formula (1), the sulfonic acid group and the silicon atom are preferably bonded covalently to each other. Moreover, the bond preferably has no polar groups, and as a specific example of such a bond there is preferably used alkylene group. The alkylene group indicates a chain having a -CH₂- structure preferably free of branched structure. If the sulfonic acid group and the silicon atom in the formula (1) are ionically bonded or hydrogen-bonded to each other rather than covalently, it is likely that the sulfonic acid group-silicon atom bond can be unstable in a high temperature and humidity atmosphere which is the operating atmosphere of fuel cell, causing the elution of sulfonic acid groups from the membrane that makes it impossible to obtain a stable conductivity. Further, when the sulfonic acid group and the silicon atom are bonded covalently but via a polar group such as ether bond and ester bond, it is likely that the resulting membrane can undergo hydrolysis under high temperature, high humidity and strong acid conditions at which the fuel cell is operated, causing the elution of sulfonic acid groups from the membrane to disadvantage. On the other hand, when the sulfonic acid group and the silicon atom are covalently bonded to each other via alylene group, the resulting membrane is stable even under high temperature, high humidity and strong acid conditions. A raw material of alkylene group having a length of 20 or less carbon atoms is available and thus can be preferably used. In particular, those having 3 carbon atoms are general-purpose products and thus are easily available at reduced cost. Herein, even an alkylene group can decompose under the effect of radicals generated in the vicinity of the cathode if it has a branched structure. Thus, a straight-chain alkylene group free of branched structure can be more preferably used.

Examples of the structure of the proton conducting membrane having a crosslinked structure formed by silicon-oxygen bond as well as sulfonic acid groups are reported by Poinsignon et al in "Electrochimica Acta", Vol. 37, pp. 1, 615 - 1,618, 1992 and "Polymers for Advanced Technologies", Vol. 4, pp. 99 - 105, 1993.

The sulfonic acid in the crosslinked structure by Poinsignon et al is obtained by sulfonation of benzene rings (having benzyl group connected to silicon atom) in the crosslinked structure. In this crosslinked structure, the sulfonic acid group and the silicon atom are covalently bonded to each other. However, since the structure having sulfonic acid groups directly bonded to benzene ring can easily undergo desulfonation reaction and has benzyl carbon which acts as an active point in a severe atmosphere such as oxidation, it is difficult to expect sufficient durability. In the present invention, as previously mentioned, sulfonic acid and Si-O crosslinkage are covalently bonded to each other via alkylene group, making it possible to realize a higher heat resistance and durability.

Further, the silicon atom in the formula (1) preferably two or three functional groups taking part in crosslinking. The number of functional groups taking part in crosslinking may be 1. However, in this case, the resulting structure blocks crosslinkage. Therefore, when such a structure of the formula (1) is introduced in a large amount to secure a sufficient amount of sulfonic acid groups, undercrosslinking occurs, making it impossible to form a membrane or causing the formation of a membrane having a deteriorated durability. Even when the number of functional groups taking part in crosslinking is 1, such a structure of the formula (1) can be introduced in an amount such that the physical properties of membrane cannot be drastically affected. On the other hand, when the number of functional groups taking part in crosslinking is 3, such a structure of the formula (1) can realize a high crosslink density and thus can be particularly preferably used. In this case, when such a structure of the formula (1) is singly used, it is likely that a hard brittle membrane can be formed. Thus, it is preferred that such a structure of the formula (1) be used in combination with other crosslinkable structures or water-insoluble structures or in combination with a structure of the formula (1) wherein the number of functional groups taking part in crosslinking is 2. A structure of the formula (1) wherein the silicon atom has two functional groups taking part in crosslinking has a straight-chain structure and thus is preferably used in combination with other crosslinkable structures or a structure of the formula (1) wherein the number of functional groups taking part in crosslinking. Herein, referring to the structure of the formula (1) wherein the silicon atom has two functional groups taking part in crosslinking, arbitrary substituents selected from substituents inert to high temperature, high humidity and strong acid conditions such as alkyl group can be arranged besides bond to crosslinking group and bond to sulfonic acid group via methylene group. Among these alkyl groups, methyl group can be easily available as raw material and thus can be preferably used.

Further, OH groups may be left uncompleted in the bonding reaction with the crosslinked structure on the silicon atom in the formula (1).

Herein, the proportion of the silicon atoms having sulfonic acid group shown in the formula (1) in all the silicon atoms and other metal atoms in the membrane is 3 atom-% or more, preferably 10 atom-% or more, more preferably 15 atom-% or more. When the proportion of the silicon atom is less than 3 atom-%, the concentration of sulfonic acid groups is short, making it impossible to obtain a sufficient conductivity. When the proportion of the silicon atoms having sulfonic acid group is 10 atom-% or more, a substantially sufficient conductivity can be obtained. When the proportion of the silicon atoms having sulfonic acid group is 15 atom-% or more, a high conductivity can be obtained.

There is no upper limit of the content of silicon atoms having sulfonic acid group. The closer to 100 atom-% the content of silicon atoms is, the higher is the conductivity. On the other hand, when the content of silicon atoms is 100 atom-%, the concentration of sulfonic acid groups is too high, making it likely that a membrane which is unstable to water (which can be dissolved in hot water, for example) can be formed. Therefore, other crosslinkable structures, water- insoluble structures or the like can be properly added. The upper limit of the structure of the formula (1) cannot be unequivocally predetermined because it depends on the kind of other crosslinkable structures or water-insoluble structures incorporated in the membrane, but is normally 95 atom-% or less, preferably 90 atom-% or less, more preferably 80 atom-% or less.

It is essential that materials (hydrogen ion or hydrate thereof) can diffuse and move in the proton conducting membrane. When the entire membrane is arranged to allow the movement of materials (e.g., porous structure), the diffusion and movement of materials can be extremely easily made to provide a high protonic conductivity. On the other hand, when such a porous structure is extremely introduced, problems arise such as deterioration of film strength and physical properties and failure in provision of fuel barrier properties. Therefore, it is preferred that a proper continuous ion conduction path (referred to as "ion channel") be provided in the structure for keeping the physical properties of membrane.

For example, commercially available Nafion film is known to have a structure based on main chain of fluororesin as well as ion channel structure formed by association of side chain sulfonic acid groups, attaining desired physical properties and conductivity at the same time. The ion channels are substantially micropores the inner surface of which has acid groups present thereon.

The proton conducting membrane realized by the present invention has such ion channels. The diameter and number of ion channels can be confirmed under transmission electron microscope. In some detail, the average diameter of ion channels is from 0.5 nm to 50 nm, more preferably from 1 nm to 10 nm. When the ion channels are too small, the movement of protons or proton hydrates is inhibited, making it impossible to raise ionic conductivity. On the contrary, when the ion channels are too large, the resulting membrane is brittle and has deteriorated fuel gas barrier properties. Thus, the above cited range is desirable.

In the membrane of the present invention, the average diameter of ion channels can be arbitrarily adjusted by the materials and process used and the kind, molecular weight and added amount of themicropore-forming agent (B) described later.

The number of ion channels depends on the membrane materials and the diameter of ion channels and thus has no limit. However, when the number of ion channels is too small, a sufficient ionic conductivity cannot be obtained. When the number of ion channels is too large, the resulting membrane is brittle. Therefore, the number of ion channels can be selected such that a sufficient ionic conductivity can be assured while keeping desired physical properties. The number of ion channels can be controlled also by the kind of micropore-forming agent, the membrane materials, the curing conditions or the solvent used, etc.

The number of ion channels cannot be definitely defined but is preferably from 2% to 70%, particularly preferably from 5% to 50% as calculated in terms of volume ratio (porosity) of micropores per unit volume by way of example. However, since the number of ion channels, too, depends on the materials or diameter of ion channels, the present invention is not limited to the above range. This porosity is almost equivalent to water impregnatable amount (water content) of membrane and thus can be defined by water content. The water content can be calculated by ((weight of water-impregnated membrane - weight of dried membrane)/volume of membrane) supposing that the specific gravity of water is 1.

As previously mentioned, the proton conducting membrane of the present invention has a high conductivity and exhibits some heat resistance, durability, dimensional stability and fuel barrier properties and, when used in polymer solid electrolytic fuel cell which has recently been noted, can thus raise the operating temperature to 100°C or more, resulting in the accomplishment of enhancement of electricity- generating efficiency and reduction of CO poisoning of catalyst.

Further, the use of this proton conducting membrane makes it possible to provide a solid polymer type fuel cell capable of coping with high temperature operation or direct supply of fuel (e.g., methanol).

### 2. Method for producing proton conducting membrane

The method for producing the aforementioned proton conducting membrane is not specifically limited, but the following steps (1) to (4) for Examples are used.

### (First step)

This is a step of preparing a mixture containing a mercapto group-containing oligomer (A) having a plurality of mercapto groups and a reactive group which can be subjected to condensation reaction to form Si-O-Si bond.

### (Second step)

This is a step of forming the aforesaid compound obtained at the first step into membrane.

### (Third step)

This is a step of subjecting the aforesaid membrane-like material obtained at the second step to condensation reaction to obtain a gel.

### (Fourth step)

This is a step of oxidizing and converting the mercapto groups in the membrane to sulfonic acid groups.

The materials and process to be used in the method for producing the proton conducting membrane of the present invention will be further described hereinafter.

### 2.1 First step

In the method for producing the proton conducting membrane of the present invention, the first step is a step of preparing a mixture containing a mercapto group-containing oligomer (A) as a raw materials.

### 2.1.1 Mercapto group-containing oligomer (A)

In the present invention, a mercapto group-containing oligomer (A) having a plurality of mercapto groups and a reactive group which can be subjected to condensation reaction to form Si-O-Si bond is used. The mercapto group-containing oligomer (A) is a compound which is a raw material for forming a structure of the formula (1) having sulfonic acid groups connected thereto via alkylene group in the proton conducting membrane of the present invention. When the mercapto group-containing oligomer is subjected to oxidation at the subsequent fourth step, the mercapto group is converted to sulfonic acid group.

In order to attain the structure of the formula (1), it is not necessarily required to use a mercapto group-containing oligomer. For example, a compound having one mercapto group and crosslinkable silyl group (referred to as "mercapto group-containing alkoxysilane (C)") can be used to form such a structure. Specific examples of such a mercapto group-containing alkoxysilane (C) include 3-mercaptopropyltrimethoxy silane, 3-mercaptopropylmethyldimethoxysilane, etc. as described in detail later. In fact, as proposed by the present inventors in Japanese Patent Application Number 2002-109493, JP02/11242 (PCT), etc., the use of the mercapto group-containing alkoxysilane (C), too, makes it possible to realize a proton conducting membrane having a good conductivity and durability if used in combination with a proper crosslinkable matter or the crosslinking reaction is controlled.

Further, Fujinami et al propose in JP-A-2002- 184427 that a crosslinked material formed by a mercapto group-containing alkoxysilane (C), boron oxide and other alkoxysilyl compounds in combination is oxidized to obtain a heat-resistant proton conducting membrane having a high conductivity.

In accordance with the aforementioned method by Fuj inami et al, the crosslinked structure of mercapto group-containing alkoxysilane (C) with boron oxide and the crosslinked structure of mercapto group-containing alkoxysilane (C) with boron oxide and other alkoxysilyl compounds are obtained in the form of powder and thus are not in the form of membrane per se. In order to form these crosslinked structures into membrane, it is necessary that they be complexed with other polymer materials, requiring additional steps of dispersion, etc. Further, even if the crosslinked material has a high heat resistance itself, the heat resistance of the membrane is not necessarily high because the heat resistance of the polymer materials to be complexed therewith is poor.

Moreover, Slade et al similarly propose in "Solid State Ionics", Vol. 145, pp. 127 - 133, 2001, that when a mercapto group-containing alkoxysilane (C) and other alkoxysilyl compounds are crosslinked and oxidized in combination, an electrolytic material can be obtained. The morphology of materials is not described in detail, but it is made obvious that the electrolytic material becomes deliquescent at a high humidity. Thus, the electrolytic material has no physical properties good enough for proton conducting membrane.

Further, Kaliaguine et al propose in "Microporous and Mesoporous Materials", Vol. 52, pp. 29 - 37, 2002, that when mixtures of mercapto group-containing alkoxysilane (C) and tetraethoxysilane at various ratios are subjected to crosslinking in the presence of a surface active agent or the like followed by oxidation, an electrolytic material having micropores that act as ion channels can be synthesized. In this case, too, the electrolytic material is obtained in the form of powder. In order to use the electrolytic material as a proton conducting membrane, it is necessary that it be supported on or complexed with a separate material. When such a separate material is used, it becomes necessary that the dispersion of the electrolytic material in the separate material be controlled or problems with durability and heat resistance of the separate material itself can arise as in the case of the system of Fujinami et al.

Moreover, Popall et al report a crosslinkable proton conducting material comprising a sulfonic acid group-containing alkoxysilane having sulfonic acid groups rather than mercapto group-containing alkoxysilane (C) in "Electrochimica Acta", Vol. 43, pp. 1,301 - 1,306, 1998, and "Electrochimica Acta", Vol. 45, pp. 1,377 - 1,383, 200. Examples of the sulfonic acid group-containing alkoxysilane include 3-trialkoxy silylpropanesulfonic acid, and 3-trihydroxysilyl propanesulfonic acid, which is a hydrolyzate thereof. In the former literature, a sulfonic acid group-containing alkoxysilane is used in combination with other crosslinking systems. The resulting crosslinkable proton conducting material is studied as a photolithographic material rather than proton conducting membrane. The proposed crosslinkable proton conducting material is in the form of thin film but is not in the form of proton conducting membrane per se. Further, in the latter literature, a proton conducting membrane comprising 3-triethoxysilylpropanesulfonic acid is reported. The properties of the proton conducting membrane obtained are not described in detail. The present inventors prepared a crosslinkable proton conducting membrane from 3-trihydroxysilylpropanesulfonic acid in the same manner as described in the article and then studied it. As a result, a very brittle membrane was obtained. It was thus difficult to obtain a membrane having a sufficient size as a proton conducting membrane.

On the other hand, the present invention is characterized by the use of a mercapto group-containing oligomer (A) obtained by the condensation of a plurality of mercapto group-containing alkoxysilanes (C) or the condensation of a mercapto group-containing alkoxysilane (C) with other crosslinkable compounds (referred to as "hydrolyzable silyl compound (D), and/or hydrolyzable silyl compound (E), described later) . The use of such a mercapto group-containing oligomer (A) makes it easier to control crosslinking than the use of mercapto group-containing alkoxysilane (C) and hence makes it easy to obtain a membrane-like electrolytic material. In some detail, in the case where the mercapto group-containing alkoxysilane (C) is not used in the form of oligomer, it is difficult to adjust the reactivity with other crosslinking agents. In most cases, only a powder form can be obtained as in the above cited literatures, making it extremely difficult to obtain a membrane-like material. On the other hand, as previously proposed by the present inventors, the combination with specific crosslinking agents makes it possible to obtain a membrane-like material, but the kindof crosslinkingagents or the crosslinking reaction conditions are limited.

In the case where the crosslinking agents to be combined with the main component and the crosslinking reaction conditions are not desirable, a membrane-like material cannot be obtained, but only a powdered or hard and brittle material can be obtained which can be difficultly used as a proton conducting membrane.

On the contrary, in the case where the mercapto group-containing oligomer (A) is used, the crosslinkable groups in the oligomer can be freely controlled, making it possible to drastically enhance the degree of freedom of crosslinking agents to be combined with the main component or the crosslinking conditions. Further, by adjusting the formulation and polymerization degree of the oligomer (A), the reaction rate, polarity, etc. can be adjusted and the process window can be expanded, making it easy to form a large area membrane.

Moreover, by previously arranging a plurality of mercapto groups in the oligomer, efficient protonic conduction paths (ion channels) can be formed. Thus, when a chain of acid groups is previously formed by controlling the structure of the oligomer (A), a sufficient protonic conductivity can be obtained by a small amount of an acid group, making it more easy to attain excellent physical properties of membrane (e.g., durability, heat resistance, water resistance, dynamic properties) as well.

For these reasons, in the present invention, the mercapto group-containing alkoxysilane (C) is not used as it is, but a mercapto group-containing oligomer (A) having a plurality of mercapto groups prepared by subjecting the mercapto group-containing alkoxysilane (C) to polycondensation reaction according to the preparation process described later is used as a film-forming raw material.

As the method for the preparation of the mercapto group-containing oligomer (A) there may be used a process which comprises subjecting the mercapto group- containing alkoxysilane (C) to polycondensation singly or with other hydrolyzable silyl compounds (D) and (E).

As the mercapto group-containing alkoxysilane (C) there may be used any compound having at least one mercapto group and at least one alkoxysilyl group. Thus, the mercapto group-containing alkoxsilane (C) is not specifically limited. In particular, however, a compound having a structure of the following formula (2) is preferably used.

(R³)ₜ(R⁴)ₘSi-(CH₂)ₙ-SH (2)

wherein R³ represents a group selected from the group consisting of CH₃, C₂H₅, C₃H₇, C₄H₉ and C₆H₅; R⁴ is a group selected from the group consisting of OCH₃, OC₂H₅, OC₃H₇ and OC₄H₉; t represents an integer of 0 or 1; m represents an integer of 2 or 3; the sum of m and t is 3; and n represents an integer of from 1 to 20.

The structure of the formula (2) is the basic structure of the mercapto group-containing alkoxysilane (C) having one mercapto group and alkoxysilyl group. The mercapto group and the alkoxysilyl group are connected to each other with a methylene straight chain, and this is a raw material of the structure of the formula (1) disclosed in the first invention.

The mercapto group-containing alkoxysilane (C) has two or three R⁴'s, which are reactive groups, on the silicon atom. When the number of R⁴'s is 1, the polycondensation reaction, if effected, is suspended, making it impossible to form the desired mercapto group-containing oligomer (A). Further, such a mercapto group-containing alkoxysilane (C) can lower extremely the reactivity of the mercapto group-containing oligomer (A) and thus can be difficultly used as a main component. However, a small amount of mercapto group-containing alkoxysilane (C) having one R⁴ may be used to adjust the molecular weight of the mercapto group-containing oligomer (A).

As R⁴, which is a reactive group in the formula (2), there may be used any group which can be subjected to condensation reaction or can be subj ected to hydrolysis to form a condensable group. Examples of such a reactive group include hydroxyl group, alkoxy group, acetoxy group, chlorine, etc. Among these reactive groups, acetoxy group and chlorine are not desirable because they have too high reactivity to control reaction and can react with mercapto group. Hydroxyl group may be used but must be used with notice because it gives reduced pot life. In this sense, alkoxy group may be used most preferably, and an alkoxy group having 4 or less carbon atoms which is easily available may be used particularly preferably.

Specific examples of the mercapto group-containing alkoxysilane (C) having three R⁴'s, which are reactive groups, on the silicon atom include 3-mercaptopropyl trimethoxysilane, 3-mercaptopropyltriethoxysilane, 3-mercaptopropyltripropoxysilane, 3-mercaptopropyl tributoxysilane, 2-mercaptoethyl trimethoxysilane, 2-mercaptoethyltriethoxysilane, 2-mercaptoethyl tripropoxysilane, 2-mercaptoethyltributoxysilane, mercaptomethyltrimethoxysilane, etc., but the present invention is not limited thereto.

Among these groups, those wherein R⁴ in the formula (2) is OCH₃ or OC₂H₅ group are preferred, and in particular, 3-mercaptopropyltrimethoxysilane and 3-mercaptopropyl triethoxysilane, wherein t, m and n in the formula (2) are 0, 3 and 3, respectively, are commercially available from Gelest, Inc. and can be preferably used. Among the two groups, 3-mercaptopropyltrimethoxysilane, wherein R⁴ is OCH₃ group, is a general-purpose product which can be available in a large amount at reduced cost and thus can be preferably used.

Further, in order to control reactivity, those wherein in the formula (2) two reactive groups R⁴ and one non-reactive group R³ are connected to each other may be used. As the non-reactive group R³ there may be used any group which doesn't react with alkoxysiliyl group without any special limitation, but an alkyl group having four or less carbon atoms and a phenyl group are preferably used taking into account stability, cost, etc.

Specific examples of the mercapto group-containing alkoxysilane (C) having two R⁴'s, which are reactive groups, on the silicon atom (i.e., m=2) and one R³, which is anon-reactive group, (i.e., t = 1) include 3-mercapto propylmethyldimethoxysilane, 3-mercaptopropylmethyl diethoxysilane, 3-mercaptopropylmethyldipropoxy silane, 3-mercaptopropylmethyldibutoxysilane, 3-mercaptopropylethyldimethoxysilane, 3-mercaptopropyl butyldiethoxysilane, 3-mercaptopropylphenyldimethoxy silane, mercaptomethyldiethoxysilane, etc., but the present invention is not limited thereto.

Among these compounds, those wherein in the formula R⁴ is OCH₃ group or OC₂H₅ group and R³ is CH₃ group are preferred. Among these compounds, 3-mercaptopropyl dimethoxymethylsilane, wherein in the formula (2) n is 3, is commercially available from Gelest, Inc. and thus can be preferably used.

Further, the corresponding mercapto group- containing alkoxysilane (C), even if not commercially available, can be obtained by a process which comprises subjecting a straight-chain hydrocarbon compound having 20 or less carbon atoms and having a double bond and a halogen group to hydrosilylation reaction in the presence of a platinum catalyst so that a desired alkoxysilyl group is introduced into the double bond portion, and then reacting the halogen group portion with sodium sulfide or a method which comprises subjecting the hydrocarbon compound, if it has two double bonds, to hydrosilylation reaction so that an alkoxysilyl group is introduced into one of the two double bonds, adding thiosulfuric acid or the like to the other, and then subjecting the hydrocarbon compound to hydrolysis (The hydrocarbon compound may be used as it is without being subjected to hydrolysis). Alternatively, if a material having an alkoxysilyl group and a halogen group or double bond is used, the reaction can be completed in one stage to advantage.

The number (m) of reactive groups in the formula (2) is preferably 2 or 3 as mentioned above, but these compounds may be properly mixed to adjust the number of reactive groups.

Further, the raw material composition of mercapto group-containing oligomer (A) may contain at least one hydrolyzable silyl compound (D) represented by the following chemical formula (3):

Si(R⁵)₄ (3)

wherein R⁵ represents a group selected from the group consisting of Cl, OH, OCH₃, OC₂H₅, OC₃H₇, OC₄H₉ and OCOCH₃.

As R⁵, which is a reactive group in the formula (3), there may be used any group which can be subjected to condensation reaction or can be subjected to hydrolysis to form a condensable group. Examples of such a reactive group include hydroxyl group, alkoxy group, acetoxy group, chlorine, etc. Among these reactive groups, alkoxy group can be used most preferably. The reason for this selection is the same as the reason for the selection of reactive groups in the mercapto group-containing alkoxysilane (C). Among these groups, an alkoxy group having 4 or less carbon atoms which is easily available may be used particularly preferably.

Accordingly, actual examples of desired hydrolyzable silyl compound (D) include tetramethoxysilane, tetraethoxysilane, tetraisopropoxysilane, tetrabutoxysilane, etc. Among these groups, tetramethoxysilane and tetraethoxysilane are general-purpose inexpensive products which are easily available in a large amount and thus can be used particularly preferably.

Further, the raw material composition of mercapto group-containing oligomer (A) may contain at least one hydrolyzable silyl compound (E) represented by the following chemical formula (4):

(R⁵)ₘ(R⁶)ₙSi (4)

wherein R⁵ represents a group selected from the group consisting of Cl, OH, OCH₃, OC₂H₅, OC₃H₇, OC₄H₉ and OCOCH₃, R⁶ represents a group selected from the group consisting of CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅, m represents an integer of 2 or 3; and n represents an integer or 1 or 2, with the proviso that the sum of m and n is 4.

There are two or three R⁵'s, which are reactive groups, on the silicon atom. In the case where the number of R⁵'s is 1 (i.e., m=1), it is likely that when polycondensation reaction is effected, the terminal of the molecule can be blocked or the reactivity of the oligomer (A) can be extremely lowered as in the case of the mercapto group-containing oligomer (C). Accordingly, the hydrolyzable silyl compound (E) can be difficultly used as a main component but may be added in a small amount to adjust the molecular weight of the mercapto group-containing oligomer (A).

As R⁵, which is a reactive group in the formula (4), there may be used any group which can be subjected to condensation reaction or can be subjected to hydrolysis to form a condensable group. Examples of such a reactive group include hydroxyl group, alkoxy group, acetoxy group, chlorine, etc. Among these reactive groups, alkoxy group can be used most preferably. The reason for this selection is the same as the reason for the selection of reactive groups in the mercapto group-containing alkoxysilane (C). Among these groups, an alkoxy group having 4 or less carbon atoms which is easily available may be used particularly preferably.

Accordingly, examples of these hydrolyzable silyl compounds (E) include methoxylated products such as methyltrimethoxysilane, phenyltrimethoxysilane, dimethyldimethoxysilane, phenylmethyldimethoxysilane, ethyltrimethoxysilane, n-propyltrimethoxysilane, i-propyltrimethoxysilane, n-butyltrimethoxysilane, n-hexyltrimethoxysilane, n-octyltrimethoxysilane, n-undecyltrimethoxysilane, n-dodecyltrimethoxysilane, n-hexanedecyltrimethoxysilane and n-octadecyl trimethoxysilane, and ethoxylation, isopropoxylation and butoxylation products thereof, but the present invention is not limited thereto and any compounds may be used without limitation so far as they are represented by the formula (4). Among these compounds, those wherein R⁵ is methoxy or ethoxy can be easily controlled in reactivity and available and thus can be used particularly preferably.

Those wherein the number of reactive groups (i.e., m in the formula (4)) is 2 or 3 may be used without any special limitation and these compounds may be used in proper admixture.

The method for producing the mercapto group-containing oligomer (A) having a plurality of mercapto groups from the aforementioned mercapto group-containing alkoxysilane (C) and optionally the hydrolyzable silyl compound (D) and/or (E) as raw materials is not specifically limited, and known processes as disclosed in JP-A-9-40911, JP-A-8-134219, JP-A-2002-30149, Journal of Polymer Science: Part A: Polymer Chemistry, Vol. 33, pp. 751 - 754, 1995, Journal of Polymer Science: Part A: Polymer Chemistry, Vol. 37, pp. 1,017 - 1,026, 1999, etc. may be used.

The method for producing the mercapto group-containing oligomer (A) of the present invention is not limited to these processes, but an example thereof will be given below.

### (Procedure 1)

To a mercapto group-containing alkoxysilane (C) represented by the chemical formula (2) and optionally a hydrolyzable silyl compound (D) and/or (E) in a total amount of 100 parts by weight are added 100 parts by weight of ethanol. To the mixture is then added a small amount (e.g., 1 part by weight) of, e.g., 1N aqueous solution of HCl as a catalyst. The mixture is then heated (e.g., to 60°C). The mixture is stirred until the component (C) or optionally added components (D) and (E) are polymerized (e.g., for 3 hours). The polymerization degree can be traced and confirmed by gel permeation chromatography (GPC).

### (Procedure 2)

The crude product of mercapto group-containing oligomer (A) obtained in the procedure 1 was heated under reduced pressure to remove the solvent and unreacted components (C) or (D) and (E).

The mercapto group-containing oligomer (A) thus obtained can be measured for approximate molecular weight by GPC. Further, in the case where as raw materials there are used the components (D) and (E) besides the component (C), these copolymerization formulations can be measured by nuclear magnetic resonance spectrum (nuclear seeds measured: H, C, Si) .

The silicon atom-containing oligomer (A) obtained by these synthesis processes is a compound represented, e.g., by the following formula (5) if as a raw material there is used only the mercapto group-containing alkoxysilane (C): 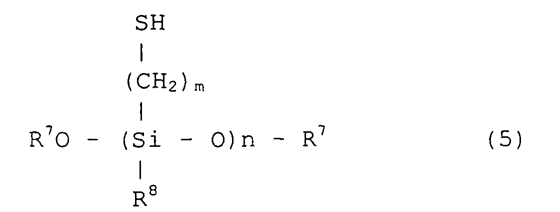 wherein R⁷ represents a group selected from the group consisting of H, CH₃, C₂H₅, C₃H₇ and C₄H₉; R⁸ represents a group selected from the group consisting of CH₃, C₂H₅, C₃H₇, C₄H₉, C₆H₅, OH, OCH₃, OC₂H₅, OC₃H₇ and OC₄H₉; m represents an integer of from 1 to 20; n represents an integer of from 2 to 100; R⁸ may be a mixture of the same or different substituents; and R⁸ may have a branched structure which is partially a -OSi bond or an intramolecular annular structure.

Herein, the kind of the functional groups R⁷ and R⁸ and the number m in the formula (5) are determined by the raw materials used. Herein, R⁸ maybe a reactive group or a non-reactive group or may be a mixture thereof. This depends on the numbers m and t in the structure of the formula (2). When m and t in the formula (2) are 3 and 0, respectively, R⁸ is a reactive group. When m is 2 and t is 1, R⁸ is a non-reactive group. When a mixture of materials wherein m is from 3 to 2 and t is from 0 to 1 is used, R⁸ is a mixture of a reactive group and a non-reactive group.

Further, R⁷ may be hydrolyzed to form H (silanol). R⁸, even if it is a reactive group, may be hydrolyzed to form OH (silanol).

Further, R⁸, if it is a reactive group, may form a branched structure partially having a mercapto group-containing alkoxysilane (C) connected thereto or may be connected to some of R⁷'s or R⁸'s in the molecule to form an annular structure.

Further, the polymerization degree represented by n in the formula (5) is preferably from 2 to 100. When n is less than 2, the resulting product is a mercapto group-containing alkoxysilane (C) itself, making it difficult to obtain a film-like proton conducting membrane. On the contrary, n can be difficultly raised to more than 100 from the standpoint of synthesis process (gelation). More preferably, nin the formula (5) is from 3 to 50.

As previously mentioned, among the mercapto group-containing alkoxysilanes (C) represented by the formula (2), 3-mercaptopropyl trimethoxysilane and 3-mercaptopropyl triethoxysilane are commercially available, and in particular, 3-mercaptopropyl trimethoxysilane is available at reduced cost in a large amount and thus can be preferably used. In the case where 3-mercaptopropyl trimethoxysilane is used as a raw material, a compound of the formula (5) wherein R⁷ and R⁸ each are OCH₃ group and m is 3 can be obtained. As previously mentioned, R⁷ and R⁸ in the formula (5) each may remain to be a methoxy group, may be partly hydrolyzed to form a silanol or may have a branched structure or an intramolecular annular structure.

Referring further to the silicon atom-containing oligomer (A) obtained by these synthesis processes, when the mercapto group-containing alkoxysilane (C) and the hydrolyzable silyl compound (D) and/or (E) are used as raw materials, a compound represented, e.g., by the following formula (6) can be obtained. 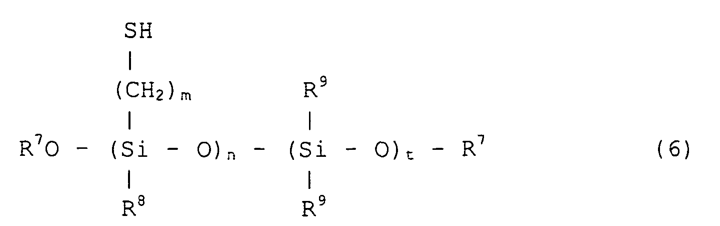 wherein R⁷ represents a group selected from the group consisting of H, CH₃, C₂H₅, C₃H₇ and C₄H₉; R⁸ represents a group selected from the group consisting of CH₃, C₂H₅, C₃H₇, C₄H₉, C₆H₅, OH, OCH₃, OC₂H₅, OC₃H₇ and OC₄H₉; R⁹ represents a group selected from the group consisting of OH, OCH₃, OC₂H₅, OC₃H₇, OC₄H₉, CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅; m represents an integer of from 1 to 20; n represents an integer of from 1 to 100; t represents an integer of from 1 to 100; R⁸ and R⁹ each may be a mixture of the same or different substituents; R⁸ and R⁹ each may be a branched structure which is partially a -OSi bond or an annular structure; and the unit containing a mercapto group and the unit containing R⁹ may exist in block or random form.

Herein, the kind of functional groups R⁷, R⁸ and R⁹ and the number m in the formula (6) are determined by the raw materials used. Herein, R⁸ may be a reactive group or a non-reactive group or may be a mixture thereof. This is the same as in the oligomer of the formula (5). R⁹ in the formula (6) may be a reactive group or a non-reactive group or may be a mixture thereof. In the case where the hydrolyzable silyl compound (D) represented by the formula (3), for example, is used as a raw material of the oligomer (6), all R⁹'s are a reactive group. In the case where the hydrolyzable silyl compound (E) represented by the formula (4) is used, one of R⁹'s is a reactive group while the other is a non-reactive group or both the two R⁹'s are a non-reactive group. This is determined by the numeral values m and n in the formula (4). In the present invention, in the case where as the mercapto group-containing oligomer (A) there is used one represented by the formula (6), one of the hydrolyzable silyl compounds (D) and (E) may be used. Alternatively, both the hydrolyzable silyl compounds may be used in admixture. Alternatively, a plurality of kinds of the hydrolyzable silyl compounds (E) represented by the formula (4) may be used in admixture. These hydrolyzable silyl compounds are greatly reflected in the physical properties of the finally obtained proton conducting membrane, and various properties such as protonic conductivity and physical properties of film can be adjusted by taking into account the combination of these hydrolyzable silyl compounds (D) and (E) with the mercapto group-containing alkoxysilane (C) or with the crosslinking agent to be used in the film formation.

Further, R⁷ in the formula (6) may be hydrolyzed to form H (silanol). R⁸ and R⁸, even if they are reactive groups, may be similarly hydrolyzed to form OH (silanol).

Further, R⁸ and R⁹, if they are reactive groups, each may form a branched structure partly having the mercapto group-containing alkoxysilane (C) or the hydrolyzable silyl compounds (D) and (E) connected thereto or may be connected to some of R⁷'s, R⁸'s or R⁹'s in the molecule to form an annular structure.

Moreover, the proportion of the unit derived from the mercapto group-containing alkoxysilane (C) and the unit derived from the hydrolyzable silyl compound (D) and/or (E) represented by n and t in the formula (6), respectively, are not specifically limited and are properly determined taking into account the physical properties of the film. However, since when the proportion of the unit derived from the mercapto group-containing alkoxysilane (C) is extremely small, the desired conductivity cannot be sufficiently assured, the proportion of the unit derived from the mercapto group-containing alkoxysilane (C) in the entire oligomer (n/ (n + t)) is normally 5% or more.

The total polymerization degree of the formula (6) (n + t) is preferably from 2 to 200. When n is less than 2, it is made difficult to obtain a film-like proton conducting membrane. On the contrary, when n is more than 200, it is made difficult to synthesize the oligomer (A), causing gelation. The value of (n + t) in the formula (6) is more preferably from 3 to 50.

As previously mentioned, among the mercapto group-containing alkoxysilanes (C) represented by the formula (2), 3-mercaptopropyltrimethoxysilane and 3-mercaptopropyltriethoxysilane are commercially available, and in particular, 3-mercaptopropyl trimethoxysilane is available at reduced cost in a large amount and thus can be preferably used. Further, as the hydrolyzable silyl compound (D), general-purpose tetraethoxysilane and tetramethoxysilane are similarly available at reduced cost in a large amount and thus can be preferably used. The two compounds can be preferably used in combination because a highly crosslinked proton conducting membrane can be realized.

In the case where as the mercapto group-containing alkoxysilane (C) there is used 3-mercaptopropyl trimethoxysilane, a compound of the formula (6) wherein R⁷ and R⁸ each are OCH₃ group and m is 3 can be obtained. Further, when as the hydrolyzable silyl compound (D) there is used tetramethoxysilane or tetraethoxysilane, a compound of the formula (6) wherein R⁹ is OCH₃ group or OC₂H₅ group can be obtained.

As previously mentioned, R⁷, R⁸ and R⁹ in the formula (6) each may remain to be OCH₃ group or OC₂H₅ group, may be partly hydrolyzed to form a silanol or may be partly connected to other alkoxysilanes.

As previously mentioned, the polymerization degree of the mercapto group-containing oligomer (A) represented by the formula (6) and the proportion of the mercapto group-containing alkoxysilane (C) unit and the hydrolyzable silyl compound (D) and/or (E) unit can be properly identified by subjecting the product to GPC or nuclear magnetic spectrometry.

These mercapto group-containing oligomers (A) can be synthesized according to the aforementioned processes or according to literatures to properly adjust the structure thereof to one suitable for the formation of proton conducting membrane, but commercially available products may be used on the other hand. Examples of these commercially available products include X-41-1805 (reference number) (produced by Shin-Etsu Chemical Co., Ltd.), which is a product of copolymerization of 3-mercaptopropyltrimethoxysilane with tetraethoxysilane, X-41-1810 (reference number) (produced by Shin-Etsu Chemical Co., Ltd.), which is a product of copolymerization of 3-mercaptopropyl trimethoxysilane with methyltriethoxysilane, SMS-992 ((reference number) (produced by Gelest, Inc.), which is a homopolymer of 3-mercaptopropylmethyldimethoxy silane, SMS-022 and SMS-042 (reference number) (produced by Gelest, Inc.), which are products of copolymerization of 3-mercaptopropylmethyldimethoxysilane with dimethoxydimethylsilane, etc., and these products, too, can be preferably used.

Further, the mercapto group-containing oligomer (A) may be previously oxidized before use, and in this case, the oxidation of mercapto groups in the membrane, which is the fourth step, may be omitted.

The oxidation of the mercapto group-containing oligomer (A) can be carried out by the use of various oxidation methods at the fourth step described later. For the oxidation step, the mercapto group-containing oligomer may be previously dissolved in a solvent or may be heated. The sulfonic acid group-containing oligomer (S) obtained by oxidation having at least 20 atom-% of mercapto groups oxidized can be used at the first step. In this case, the various advantage of using the aforementioned oligomer can be used as they are, and since the content of sulfonic acid groups can be raised more than by the oxidation in the form of membrane, the aforementioned treatment can be preferably employed. The sulfonic acid group-containing oligomer (S) preferably has 20 atom-% or more, more preferably 50 atom-% or more, evenmore preferably 80 atom-% or more of mercapto groups in the mercapto group-containing oligomer (A) as rawmaterial oxidized. When the percent oxidation of mercapto groups is less than 20 atom-%, sufficient acid groups cannot be disposed in the membrane, making it impossible to obtain a sufficient protonic conductivity. Accordingly, the oxidation efficiency is preferably close to 100 atom-% as much as possible.

The oxidation efficiency can be determined by subjecting the sulfonic acid group-containing oligomer (S) obtained by oxidation to spectroscopy such as nuclear magnetic resonance spectrum, infrared absorption spectrum and Raman spectroscopy.

### 2.1.2 Use of micropore-forming agent (B)

As previously mentioned, the method for producing proton conducting membrane is not specifically limited, but the following steps (1) to (4) are used for example.

### (First step)

This is a step of preparing a mixture containing a mercapto group-containing oligomer (A) having a plurality of mercapto groups and a reactive group which can be subjected to condensation reaction to form Si-O-Si bond.

### (Second step)

This is a step of forming the aforesaid compound obtained at the first step into membrane.

### (Third step)

This is a step of subjecting the aforesaid membrane-like material obtained at the second step to condensation reaction to obtain a gel.

### (Fourth step)

This is a step of oxidizing and converting the mercapto groups in the membrane to sulfonic acid groups.

Herein, the mixture containing a mercapto group-containing oligomer (A) prepared at the first step may comprise an oxidatively degradable, water-soluble or hydrolyzable micropore-forming agent (B) incorporated therein before use.

It has been previously mentioned that since it is essential that materials (hydrogen ion or its hydrate) can diffuse and move in a proton conducting membrane, an ion conductance path (ion channel) through which ions are transported is preferably formed inside the membrane.

The proton conducting membrane produced by the production method of the present invention has such an ion channel. In general, when an inorganic material such as tetraethoxysilane is similarly subjected to hydrolytic decomposition condensation followed by thorough heating (e.g., to 800°C), a glassy dense crosslinked material is obtained without forming micropores corresponding to ion channels. On the contrary, the crosslinkable material to be used in the present invention is a crosslinkable alkoxysilane having an organic side chain represented, e.g., by the mercapto group-containing oligomer (A). When a crosslinkable material having such an organic side chain is crosslinked, the organic side chain inhibits crosslinking (mainly by steric hindrance), leaving the product insufficiently dense and hence providing a porous material. In other words, ion channels are naturally produced in the method for producing a proton conducting membrane of the present invention.

The size and number of ion channels thus naturally produced are properly determined by the initial formulation and process. Accordingly, it is likely that the microporous structure, too, can be unequivocally determined with respect to various formulations and processes determined taking into account the protonic conductivity and physical properties of membrane (e.g., heat resistance, durability, strength), and the control over the microporous structure with the various physical properties of membrane satisfied is limited.

For this reason, the formation of the microporous structure is preferably accomplished by a separately controllable process which is independent of membrane formulation and process.

In the present invention, a micropore-forming agent (B) is preferably used for the formation of microporous structure.

In the present invention, the micropore-forming agent (B) is caused to exist in the membrane during film formation and then removed from the membrane by extraction, oxidative degradation or hydrolysis after the formation of the crosslinked film (i.e., third step). The micropores formed at the portion from which the micropore-forming agent (B) has been removed can act as ion channels.

Accordingly, the micropore-forming agent (B) is preferably water-soluble, oxidatively degradable or hydrolyzable.

In the case where the micropore-forming agent (B) is water-soluble, it can be extracted with water, hot water or the like after the formation of film.

It is important that such a water-soluble material has a sufficiently high boiling point and thus cannot be easily evaporated. When the water-soluble material is evaporated during the formation of film (condensation reaction; mainly involving heating process in the present invention), micropores cannot be efficiently formed and the formation of micropores can be difficultly controlled. The boiling point of the micropore-forming agent (B) employable in the present invention is 100°C or more, preferably 150°C or more, more preferably 200°C or more.

Examples of the water-soluble organic material (water-soluble material) include materials having a polar substituent such as hydroxyl group, ether group, amide group and ester group, materials having an acid group such as carboxylic acid group and sulfonic acid group or salt thereof, materials having a basic group such as amine or salt thereof, etc.

Specific examples of these water-soluble organic materials include glycerin, derivatives thereof, ethylene glycol, derivatives thereof, ethylene glycol polymers (e.g.,diethylene glycol, triethylene glycol, tetraethylene glycol, polyethylene glycols having various molecular weights), saccharides such as glucose, fructose, mannitol, sorbitol and sucrose, polyvalent hydroxyl compounds such as pentaerythritol, water- soluble resins such as polyoxyalkylene, polyvinyl alcohol, polyvinyl pyrrolidone and acrylic acid, carbonic acid esters such as ethylene carbonate and propylene carbonate, alkyl sulfur oxides such as dimethyl sulfoxide, amides such as dimethyl formamide, acids such as acetic acid, propionic acid, dodecylsulfuric acid, dodecylsulfonic acid, benzenesulfonic acid, dodecylbenzenesulfonic acid and toluenesulfonic acid and salt thereof, ammonium salts such as trimethylbenzyl ammonium chloride, amines such as N,N-dimethylbenzylamine and salt thereof, amino acids such as sodium glutaminate, polyoxyethylene alkyl ethers such as ethylene glycol monomethyl ether, and anionic, cationic, nonionic and amphoteric surface active agents.

Among these water-soluble organic materials, polyoxyalkylene, which is a liquid water-soluble organic material having a proper compatibility with the mercapto group-containing oligomer (A) (or proper phase separating properties), is preferably used, particularly ethylene glycol polymer. Ethylene glycol polymers are commercially available in a wide range of from dimer (diethylene glycol) to polyethylene glycol having various molecular weights. The compatibility, viscosity, molecular size, etc. of these ethylene glycol polymers can be freely selected. Thus, these ethylene glycol polymers can be preferably used. In particular, in the present invention, those ranging from diethylene glycol having a molecular weight of about 100 to polyethylene glycol having an average molecular weight of 600 can be more preferably used. Tetraethylene glycol or polyethylene glycol having a molecular weight of about 200 can be used particularly preferably.

The size of micropores is determined by the compatibility of the micropore-forming agent (B) with the mercapto group-containing oligomer (A), the compatibility balance between the micropore-forming agent (B) and the entire system of film-forming rawmaterials, including solvent and additives, and the molecular weight and added amount of the micropore-forming agent (B). In the case of the present invention, there is some relationship between the average molecular weight of the micropore-forming agent (B) and the diameter of micropores. When a polyethylene glycol having a molecular weight of more than 600 is used, resulting pores have a great diameter, causing the deterioration of gas barrier properties or physical properties or making it unlikely that the micropore-forming agent (B) can be thoroughly extracted from the membrane. When the molecular weight of the polyethylene glycol is less than 100, the resulting membrane tends to be dense.

Further, as the water-soluble micropore-forming agent (B) there may be used an inorganic salt or the like, but an inorganic salt normally has too strong a cohesive force to be finely diffused in the mixture containing the mercapto group-containing oligomer (A) on the molecular level, if incorporated therein, making it much likely that a large crystal or amorphous solid can be formed with large pores unfavorable to physical properties of membrane and gas barrier properties. Even an inorganic salt may be used so far as it can be finely diffused in the mercapto group-containing oligomer (A).

Further, as the micropore-forming agent (B) there may be similarly used an oxidatively degradable compound or hydrolyzable compound. As the oxidatively degradable compound there may be used any material having a double bond, ether bond, sulfide bond or the like. Further, as the hydrolyzable compound there may be used any material having an ester bond, ether bond or the like.

These oxidatively degradable compounds and hydrolyzable compounds can be selected taking into account the compatibility with the mercapto group-containing oligomer (A), the balance with the entire system of membrane-forming raw materials and the molecular weight thereof as in the aforementioned water-soluble compound.

Among these compounds, the oxidatively degradable compound can be decomposed at the fourth step of oxidizing mercapto groups after the third step of forming membrane. The micropore-forming agent (B) thus decomposed has a reduced molecular weight and becomes water-soluble in most cases and thus can be easily extracted from the membrane. Thus, the oxidatively degradable compound can be preferably used.

Further, the hydrolyzable compound can be subjected to hydrolysis by an acid, base or the like after the third step so that it is similarly extracted from the membrane.

The previously exemplified ethylene glycol polymer is water-soluble but is oxidatively degradable and hydrolyzable at the same time and thus can be preferably used in the present invention. Further, variouspolyoxyalkylene copolymers, etc., too, can be similarly used as micropore-forming agent (B).

The various polyoxyalkylene polymers such as ethylene glycol polymer and polyoxy alkylene copolymers are commercially available in the form of those terminated by alkyl ether or various substituents, and these compounds, too, can be preferably used.

By the way, the added amount of the micropore-forming agent (B) cannot be unequivocally predetermined because it depends on the kind and molecular weight of the micropore-forming agent (B) or the structure of the membrane, but the micropore-forming agent (B) is normally added in an amount of from 3 to 150 parts by weight based on 100 parts by weight of the mercapto group-containing oligomer (A). When the added amount of the micropore-forming agent (B) is less than 3 parts by weight, little effect of forming micropores can be recognized. When the added amount of the micropore-forming agent (B) is more than 150 parts by weight, the percent porosity is too high, making it much likely that the resulting membrane can be brittle or have a remarkably high gas permeability.

The diameter and number of micropores (ion channels) thus obtained can be confirmed under transmission electron microscope as previously mentioned.

As mentioned above, the proton conducting membrane of the present invention canbe provided with ion channels according to the designed structure of ion channel, making it possible to enhance the protonic conductivity while assuring the desired physical properties of membrane.

### 2.1.3 Organic-inorganic composite crosslinking agent (F)

The aforementioned mercapto group-containing oligomer (A), even if it is singly used, can be subjected to sol-gel reaction in the presence of a catalyst to obtain a membrane-like material. The proton conducting membrane obtained by oxidizing the membrane so that the mercapto groups are oxidized to sulfonic acids can realize a high crosslink density while being provided with a desired amount of sulfonic acid groups and thus exhibits excellent protonic conductivity, heat resistance, durability and strength.

As previously mentioned, the mercapto group- containing oligomer (A) can realize various physical properties by adjusting the crosslinkable functional groups or structure. In the case where further adjustment of physical properties is needed, the organic-inorganic composite crosslinking agent (F) described below is additionally used.

The organic-inorganic composite crosslinking agent (F) of the present invention is a compound represented by the following chemical formula (7): 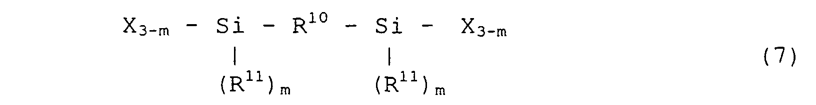 wherein X represents a group selected from the group consisting of Cl, OCH₃, OC₂H₅, OC₃H₇, OC₄H₉ and OH; R¹⁰ represents a C₁-C₃₀ carbon atom-containing molecular chain group; R¹¹ represents a group selected from the group consisting of CH₃, C₂H₅, C₃H₇, C₄H₉ and C₆H₅; and m represents an integer of 0, 1 or 2.

Herein, R¹⁰ in the formula (7) represents a C₁-C₃₀ carbon atom-containing molecular chain group and is particularly preferably a straight-chain alkylene chain represented by the formula (8):

- (CH₂)ₙ - (8)

wherein n represents an integer of from 1 to 30.

Herein, R¹⁰ is inert to acid and oxidation, and the proton conducting membrane of the present invention can be stably present even in the working atmosphere of fuel cell.

When there are polar groups, etc. in R¹⁰, it is likely that the organic-inorganic composite crosslinking agent (F) can undergo hydrolysis or oxidative degradation. Further, when there are branches, etc., it is likely that the organic-inorganic composite crosslinking agent (F) can undergo oxidative degradation. Moreover, when an aromatic compound is used, it is likely that the organic-inorganic composite crosslinking agent (F) can decompose at benzyl position. It is likely that the organic-inorganic composite crosslinking agent (F) can undergo decomposition by acid also when silicon and an aromatic ring are directly connected to each other. However, even in the case where decomposition can occur, the organic-inorganic compositecrosslinkingagent (F) canbeusedundersomeoperating conditions of fuel cell.

As such an organic-inorganic composite crosslinking agent (F) which can be expected to have a sufficient stability there may be used, e.g., bis (triethoxysilyl)ethane, bis(trimethoxysilyl)hexane, bis(triethoxysilyl)octane or bis(triethoxysilyl) nonane, which are commercially available from Gelest, Inc. Referring to organic-inorganic composite crosslinking agents (F) having other chain lengths or other hydrolyzable groups, a straight-chain hydrocarbon terminated by unsaturated bond at both ends, e.g., 1,3- butadiene, 1, 9-decadiene, 1,12-dodecadiene, 1,13- tetradecadiene, 1,21-docosadiene can be subjected to hydrosilylation reaction with various alkoxysilanes in the presence of a platinum complex catalyst to obtain a compound which is a corresponding crosslinkable compound.

In the case where triethoxysilane (HSi(OC₂H₅)₃) is used for example, 1,4-bis(triethoxysilyl)butane, 1,10-bis(triethoxysilyl)decane, 1,12-bis(triethoxysilyl) dodecane, 1,14-bis(triethoxysilyl)tetradecane or 1,22-bis(triethoxysilyl)docosane can be easily synthesized corresponding to α,ω-diene structure of rawmaterial, and those having a longer chain length, too, canbe synthesized. Further, methoxylation and propoxylation products of these compounds can be synthesized and can be effectively used in the present invention.

In the case where it is necessary that the membrane be rendered flexible to reduce somewhat the crosslink density, diethoxymethylsilane (HsiCH₃(OC₂H₅)₂), ethoxy dimethylsilane (HSi (CH₃)₂(OC₂H₅)) and other raw materials which can be easily available can be used instead of triethoxysilane in hydrosilylation reaction to obtain 1,8-bis(diethoxymethylsilyl)octane or 1,8-bis(ethoxy dimethylsilyl)octane, respectively, if 1,7-octadiene is use asarawmaterial. This makes it possible to provide the membrane with flexibility that cannot be attained merely by adjusting the crosslinkable groups in the mercapto group-containing oligomer (A). Thus, a compound of the formula (7) wherein X is OCH₃ or OC₂H₅, R¹⁰ is a straight-chain alkylene chain represented by the formula (8) and R¹¹ is CH₃ can be easily available and can be preferably used.

By the way, the organic-inorganic composite crosslinking agent (F) may be previously present in the mercapto group-containing oligomer (A). In this case, by adding the organic-inorganic composite crosslinking agent (F) during the synthesis of the mercapto group-containing oligomer (A), the mercapto group-containing oligomer (A) containing the unit of the organic-inorganic composite crosslinking agent (F) can be obtained.

### 2.1.4 Hydrolyzable silyl compound (G)

In the case where it is necessary that the physical properties of the proton conducting membrane be adjusted as in the case of the aforementioned organic-inorganic composite crosslinking agent (F), the hydrolyzable silyl compound (G) described below is additionally used.

The hydrolyzable silyl compound (G) of the present invention is a compound represented by the following chemical formula (9):

(R⁵)ₘ(R⁶)ₙSi (9)

wherein R⁵ represents a group selected from the group consisting of Cl, OH, OCH₃, OC₂H₅, OC₃H₇, OC₄H₉ and OCOCH₃, R⁶ represents a group selected from the group consisting of CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅, m represents an integer of from 1 to 4; and n represents an integer or from 0 to 3, with the proviso that the sum of m and n is 4.

The hydrolyzable silyl compound (G) is added mainly for the purpose of enhancing crosslinking degree and hence heat resistance and film strength.

Specific examples of the hydrolyzable silyl compound (G) include tetrafunctional hydrolyzable silyl compounds such as tetrachlorosilane, tetramethoxysilane, tetraethoxysilane, tetraisopropoxysilane, tetrabutoxy silane and tetraacetoxysilane, and those obtained by substituting these tetrafunctional hydrolyzable silyl compounds by one to three hydrocarbon groups such as methyl group, ethyl group, n-propyl group, i-propyl group, n-butyl group, n-hexyl group, n-octyl group, n-undecyl group, n-dodecyl group, n-hexadecyl group and n-octadecyl group.

Among these hydrolyzable silyl compounds (G), tetramethoxysilane, tetraethoxysilane, methyl trimethoxysilane and methyltriethoxysilane, which can be easily available at reduced cost, can be preferably used, and among these compounds, tetramethoxysilane and tetraethoxysilane, which can form a stronger membrane and can be easily available, can be used particularly preferably.

Further, as materials which can play a role analogous to these roles there may be used hydrolyzable compounds containing titanium and zirconium. Specific examples of these hydrolyzable compounds include titanium methoxide, titanium ethoxide, titanium n-propoxide, titanium i-propoxide, titanium n-butoxide, titanium i-butoxide, titanium t-butoxide, zirconium ethoxide, zirconium n-propoxide, zirconium i-propoxide, zirconium n-butoxide, zirconium i-butoxide, zirconium t-butoxide, acetylacetone, acetoacetic acid ester, ethanolamine, diethanolamine and triethanolamine complexes thereof, etc.

### 2.1.5 Siloxane oligomer (H)

In the case where it is necessary that the physical properties of the proton conducting membrane be adjusted as in the case of the aforementioned organic- inorganic composite crosslinking agent (F) or the hydrolyzable silyl compound (G), the siloxane oligomer (H) described below is additionally used.

The siloxane oligomer (H) of the present invention is a compound represented by the following chemical formula (10) : 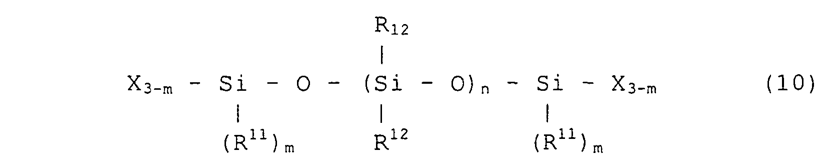 wherein X represents a group selected from the group consisting of Cl, OCH₃, OC₂H₅, OC₃H₇, OC₄H₉, OH and OCOCH₃; R¹¹ represents a group selected from the group consisting of CH₃, C₂H₅, C₃H₇, C₄H₉ and C₆H₅; R¹² represents a group selected from the group consisting of Cl, OH, OCH₃, OC₂H₅, OC₃H₇, OC₄H₉, OCOCH₃, CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅; R¹² may be a mixture of the same or different substituents; R¹² may have a branched structure which is partially a -OSi bond or an intramolecular annular structure; m represents an integer of from 0 to 2; and n represents an integer of from 1 to 100.

The siloxane oligomer (H) is a polymer of the hydrolyzable silyl compounds (D) and (E). Since it is necessary that the physical properties of membrane be adjusted while keeping the continuity of mercapto groups in the mercapto group-containing oligomer (A) and it is not necessarily desired for protonic conductivity to extremely reduce the number of units derived from the mercapto group-containing alkoxysilane (C), the design of materials is limited. On the other hand, since the siloxane oligomer (H) has no such limit, a structure can be designed with a high degree of freedom taking into account the physical properties of membrane.

Accordingly, as raw materials of the siloxane oligomer (H) there may be used hydrolyzable silyl compounds (D) and (E), and as the method for the synthesis of oligomer there may be used the same process as in the case of the mercapto group-containing oligomer (A).

Herein, the kind of functional groups R¹¹ and R¹² in the formula (10) is determined by the raw materials used. Herein, R¹² may be a reactive group or a non-reactive group or may be a mixture thereof. In the case where as the raw material of the oligomer (10) there is used the hydrolyzable silyl compound (D) represented by the formula (3) for example, all R¹²'s are a reactive group. In the case where the hydrolyzable silyl compound (E) represented by the formula (4) is used, one of R¹²'s is a reactive group while the other is a non-reactive group or both the two R¹²'s are a non-reactive group. This is determined by the numbers m and n in the formula (4). In the present invention, as the rawmaterials of the siloxane oligomer (H) there may be used one of the hydrolyzable silyl compounds (D) and (E) or both the two compounds (D) and (E) in admixture or there may be used a plurality of kinds of hydrolyzable silyl compounds (E) represented by the formula (4). These hydrolyzable silyl compounds (D) and (E) are greatly reflected in the physical properties of the finally obtained proton conducting membrane, making it possible to adjust various properties such as heat resistance and durability.

Further, in the case where R¹² in the formula (10) is a reactive group, it may be OH (silanol), and R¹² may form a branched structure partly having the hydrolyzable silyl compounds (D) and (E) connected thereto or may be connected to some of X's and R¹²'s in the molecule to form an annular structure.

The siloxane oligomer (H) can be synthesized according to the same synthesis process as in themercapto group-containing oligomer (A) or according to literatures to properly adjust the structure thereof to one suitable for the formation of proton conducting membrane, but commercially available products may be used on the other hand. Examples of these commercially available products include various oligomers such as KC-89S, KR-500, X-40-9225 and X-40-2308 (reference number) (produced by Shin-Etsu Chemical Co., Ltd.). Further, PSI-021 and PSI-023 (reference number) (produced by Gelest, Inc.), which are tetraethoxysilane polymers, etc., too, are available. These siloxane oligomers can be effectively used in the enhancement of the crosslink density of membrane.

On the other hand, these siloxane oligomers may be used to reduce the crosslink density for the purpose of rendering the membrane more flexible. For example, double-terminated silanol polydimethylsiloxane, double-terminated silanol polydiphenylsiloxane, double-terminated silanol polydimethylsiloxane- polydiphenylsiloxane copolymer, double-terminated chloropolydimethylsiloxane, diacetoxy methyl- terminated polydimethylsilxoane, methoxy - terminated polydimethylsiloxane, dimethoxymethylsilyl -terminated polydimethylsiloxane, trimethoxysilyl- terminated polydimylsiloxane, methoxymethylsiloxane- dimethylsiloxane copolymer, etc. may be used.

Further, compounds obtained by adding trimethoxysilane, dimethoxymethylsilane, methoxy dimethylsilane, triethoxysilane, diethoxymethylsilane, ethoxydimethylsilane, etc. to vinyl groups such as vinyl- terminated polydimethylsiloxane, vinyl- terminated diphenylsiloxane-dimethylsiloxane copolymer, vinyl-terminated polyphenylmethylsiloxane, polyvinylmethylsiloxane, vinylmethylsiloxane-dimethylsiloxane copolymer, vinylmethylsiloxane-diphenylsiloxane copolymer, vinylmethylsiloxane-trifluoropropylmethylsiloxane copolymer and polyvinylmethoxysiloxane by hydrosilylation reaction.

### 2.1.6 Mixing

In the method for producing the proton conductingmembrane of the present invention, the first step is a step of preparing a mixture containing the mercapto group-containing oligomer (A).

As has been mentioned above, the degree of freedom of the physical properties of membrane is high even if the functional groups in the mercapto group-containing oligomer (A) are merely adjusted (The term "mixture containing the mercapto group-containing oligomer (A) " as used herein is meant to include the case where the mixture contains only the mercapto group-containing oligomer (A)). However, the various physical properties such as protonic conductivity, heat resistance, durability and film strength can be adjusted by the addition of the organic-inorganic composite crosslinking agent (F), hydrolyzable metal compound (G), siloxane oligomer (H) or micropore-forming agent (B), which are arbitrary components.

Herein, in the case where the organic-inorganic composite crosslinking agent (F), hydrolyzable metal compound (G) and siloxane oligomer (H), which are arbitrary components, are added, the total added amount of these components cannot be unequivocally predetermined because it changes with the formulation and process of the various materials but is typically 200 parts by weight or less based on 100 parts by weight of the mercapto group-containing oligomer (A).

When the total added amount of these components exceeds this value, the concentration of acid group in the membrane is reduced, making it likely that the protonic conductivity can be lowered.

Further, in the case where the sulfonic acid group-containing oligomer (S) obtained by oxidizing the mercapto group-containing oligomer (A) has been previously used, the total added amount of the organic-inorganic composite crosslinking agent (F), hydrolyzable metal compound (G) and siloxane oligomer (H), which are arbitrary components, based on 100 parts by weight of the sulfonic acid group-containing oligomer (S) cannot be unequivocally predetermined because it changes with the formulation and process of the various materials but is typically 200 parts by weight or less.

The added amount of the micropore-forming agent (B) has been already described.

In order to prepare a mixture of these components, a solvent may be used. The solvent to be used is not specifically limited so far as these materials are uniformly mixed. In general, alcohol-based solvents such as methanol, ethanol, 1-propanol, 2-propanol and t-butanol, ether-based solvents such as tetrahydrofurane and 1,4-dioxane, etc. can be preferably used.

The proportion of the solvent is not specifically limited, but, in general, a solid concentration of from about 10 to 80% by weight can be preferably used.

Further, as described later, a condensation reaction catalyst may be added at the same time at this step.

Further, water required for hydrolysis may be added. Water is normally added in an amount equimolecular with the hydrolyzable silyl group but may be added in a larger amount to accelerate the reaction or may be added in a smaller amount to inhibit the reaction and hence prolong the pot life.

The mixing of these components can be carried out by any known method such as agitation and vibration, and the mixing method is not specifically limited so far as thorough mixing canbemade. Further, heating, pressing, defoaming, deaeration, etc. may be conducted as necessary.

Moreover, at the first step, other arbitrary components such as reinforcement, flexibilizer, surface active agent, dispersant, reaction accelerator, stabilizer, coloring agent, oxidation inhibitor and inorganic or organic filler can be added so far as the object of the present invention cannot be impaired.

### 2.2 Second step

In the method for producing the proton conducting membrane of the present invention, the second step is a step of forming the mixture obtained at the first step into membrane.

In order to form the mixture obtained at the first step into membrane, any known method such as casting, coating and molding can be used. The method for forming the mixture into membrane is not specifically limited so far as a uniform membrane can be obtained. The thickness of the membrane is not specifically limited but may be any value between 10 µm to 1 mm. The thickness of a proton conducting membrane for fuel cell is properly determined by the protonic conductivity, the fuel barrier properties and the mechanical strength of membtane, and, in general, a proton conducting membrane having a dry thickness of from 20 µm to 300 µm is preferably used. Thus, the thickness of the proton conducting membrane of the present invention is predetermined accordingly.

Further, during the step of forming membrane, a support or reinforcement such as fiber, mat and fibril may be added to the mixture. Alternatively, the support may be impregnated with the mixture. As the support or reinforcement there may be properly selected from glass material, silicone resin material, fluororesin material, annular polyolefin material, ultrahigh molecular polyolefin material, etc. As the impregnating method there may be used any known method such as dipping method, potting method, roll pressing method and vacuum pressing method without any limitation. Further, heating, pressing, etc. may be effected.

Further, in order to provide a defect-free membrane, only the second step or the second step and the third step described later may be repeated a plurality of times. In the case where film-forming step is effected a plurality of times, the mixture obtained at the same first step may be used a desired number of times. Alternatively, the formulation of the mixture obtained at the first step may vary from film-forming step to film-forming step.

### 2.3 Third step

In the method for producing the proton conducting membrane of the present invention, the third step is a step of subj ecting the membrane-like material obtained at the second step to condensation reaction in the presence of a catalyst to obtain a gel (crosslinked material).

### 2.3.1 Catalyst

The proton conducting membrane of the present invention is characterized in that the hydrolysis and condensation of alkoxysilyl group, etc. cause the formation of a crosslinked structure that exhibits a stable protonic conduction even at high temperatures and gives little change of shape. The production of Si-O-Si bond by the hydrolysis and condensation of alkoxysilyl group, etc. is well known as sol-gel reaction.

In sol-gel reaction, it is usual that a catalyst is used to acclerate and control reaction. As the catalyst there is normally used an acid or base.

The catalyst to be used in the method for producing the proton conducting membrane of the present invention may be an acid or base.

As the acid to be used as a catalyst there is preferably used a Bronsted acid such as hydrochloric acid, sulfuric acid, phosphoric acid and acetic acid. The kind, concentration, etc. of the acid are not specifically limited, and any available acids may be used. Among these acids, hydrochloric aid can bepreferablyusedbecause it causes relatively little retention after reaction. The concentration, etc. of hydrochloric acid, if used, are not specifically limited, but a 0.01 to 12 N hydrochloric acid is normally used.

In the case where a base is used as a catalyst, sodium hydroxide, potassium hydroxide, ammonia, amine compound or the like is preferably used. It is known that when an acid is used, hydrolysis and condensation normally compete with each other, providing a straight-chain crosslinked structure having few branches. On the other hand, it is known that when a base is used as a catalyst, hydrolysis occurs at once, providing a tree structure having much branches. In the present invention, any of these methods maybe employed taking into account the physical properties of membrane.

The proton conducting membrane of the present invention is characterized by high temperature stability attained by a crosslinked structure. In order to highlight this physical property, a basic catalyst can be preferably used.

As the basic catalyst there maybe used an aqueous solution of sodium hydroxide, potassium hydroxide, ammonia or the like. Further, organic amines can be particularly preferably used taking into account the compatibility with the mercapto group-containing oligomer (A), etc.

The organic amines can be used without any special limitation, but those having a boiling point of from 50°C to 250°C can be normally used preferably. Specific examples of organic amines having this range of boiling point which can be easily available include triethylamine, dipropylamine, isobutylamine, diethylamine, diethylethanolamine, triethanolamine, pyridine, piperazine, tetraethylammonium hydroxide, etc. Any of these organic amines can be preferably used.

Further, a method involving the use of a catalyst in combination with the aforementioned components, e.g., method which comprises previously forming a membrane by an acidcatalyst, adding a base to the membrane, and then subjecting the membrane to hydrolysis and condensation is also useful.

Moreover, as a catalyst there may be used additionally a fluorine compound such as potassium fluoride, ammonium fluoride, tetramethylammonium fluoride and tetraethylammonium fluoride. These fluorine compounds act to accelerate condensation reaction mainly and thus can control reaction independently of hydrolysis. Therefore, these fluorine compounds can be preferably used. As the fluorine compounds there may be preferably used potassium fluoride and ammonium fluoride because they have a high effect.

The added amount of the catalyst can be arbitrarily predetermined and thus is properly predetermined taking into account the reaction rate, the compatibility with raw materials of membrane, etc.

The step of introducing the catalyst may be effected at any time between the first step and the third step. The simplest way is to introduce the catalyst during the preparation of the mixture at the first step. The introduction of the catalyst is arbitrarily effected at the first step. For example, the catalyst may be previously added to the mercapto group-containing oligomer (A) to which the arbitrary components are then added. Alternatively, the mercapto group-containing oligomer (A) maybe added to a mixture of the arbitrary components and the catalyst which has been previously prepared. Alternatively, the catalyst may be introduced into the mixture of all the materials. Since the introduction of the catalyst triggers crosslinking reaction, it is necessary that the pot life between after the mixing of the catalyst and the membrane forming step, which is the second step, be taken into account.

In the case where the catalyst is added at the first step, it is not necessary that the catalyst be again added. However, in order to effect curing more efficiently, the mixture may be cured in an atmosphere of an acid (e.g., hydrochloric acid) or base (vapor of organic amine) or while being dipped in an aqueous solution of such an acid or base.

### 2.3.2 Condensation reaction

The condensation reaction can be effected also at room temperature but should be effected under heating to reduce the reaction time and cause more efficient curing. Heating may be carried out by any known method, and pressure heating in oven or autoclave, far infrared heating, magnetic induction heating, microwave heating, etc. may be employed. Heating may be effected to an arbitrary temperature of from room temperature to 350°C, preferably from 100°C to 300°C.

Referring further to heating, a method by which sudden change of atmosphere can be avoided, such as curing at room temperature for some period of time followed by gradual heating to high temperature may be employed.

Moreover, the condensation reaction may be effected in water vapor to supply water required for hydrolysis or may be effected in a solvent vapor to prevent sudden drying of membrane.

Further, the reaction mixture may be heated under reduced pressure to effect efficient curing or may be heated with a compound that can form an azeotrope with water.

### 2.4 Fourth step

In the method for producing the proton conducting membrane of the present invention, the fourth step is a step of oxidizing and converting the mercapto groups in the membrane obtained through the continuous procedure from the first to third steps to sulfonic acid groups.

Prior to oxidation, the membrane may be rinsed. In particular, in the case where as the micropore-forming agent (B) there is used a water-soluble material, the micropore-forming agent (B) can be extracted by rinse. In this case, efficient oxidation along the micropores formed can be made to advantage. Further, also in the case where the micropore-forming agent (B) is a hydrolyzable material, oxidation may be preceded by the decomposition with a hydrolysis catalyst such as acid and base and rinse. Moreover, in the case where as the catalyst there is used an organic amine, oxidation may be preceded by the contact of the membrane with an acid such as hydrochloric acid and sulfuric acid for the purpose of removing the catalyst.

The water to be used in rinse is preferably water free of metallic ions such as distilled water and ion-exchanged water. During rise, water may be heated or given pressure or vibration to further enhance the efficiency of rinse. Further, in order to accelerate the penetration of water into the membrane, a mixed solvent obtained by adding methanol, ethanol, n-propanol, i-propanol, acetone, tetrahydrofurane or the like to water may be used.

The mercapto group oxidizing method to be used in the present invention is not specifically limited but may involve the use of an ordinary oxidizing agent. In some detail, as described in "Shinjikken Kagaku Koza (New Institute of Experimental Chemistry)", Maruzen, 3rd Edition, Vol. 15, 1976, an oxidizing agent such as nitric acid, hydrogen peroxide, oxygen, organic peracid (percarboxylic acid), bromine water, hypochlorite, hypobromite, potassium permanganate and chromic acid may be used.

Among these oxidizing agents, hydrogen peroxide and organic peracid (peracetic acid, perbenozoic acid) can be handled relatively easily and provide a good percent oxidation and thus can be preferably used.

Further, in order to protonate the sulfonic acid groups in the membrane obtained by oxidation, the membrane may be brought into contact with a strong acid such as hydrochloric acid and sulfuric acid. In this case, the protonation conditions such as acid concentration, dipping time and dipping temperature are properly determined by the concentration of sulfonic acid groups in the membrane, the porosity of the membrane, the affinity for acid, etc. A representative example of this method is a method involving the dipping of the membrane in a 1N sulfuric acid at 50°C for 1 hour.

By the way, in the case where as the micropore-forming agent (B) there is used an oxidatively degradable material, the oxidizing agent to be used at the present step can be properly selected to oxidatively decompose the oxidatively degradable material at the same time with the oxidation of mercato groups, making it possible to simplify the procedure. Further, also in the case where as the micropore-forming agent (B) there is used a water-soluble material or hydrolyzable material, extraction or decomposition/extraction can be effected at the present step, making it possible to simplify the procedure.

For example, in the case where as the micropore-forming agent (B) there is used a polyethylene glycol having a molecular weight of 200 and as the oxidizing agent there is used a peracetic acid solution, the gel obtained through the procedure from the first to third steps can be dipped in a peracetic acid solution (30% aqueous solution of hydrogen peroxide : acetic acid = 1 : 1.25 (by volume)) heated to 60°C for 1 hour to undergo oxidation, making it possible to effect the decomposition and extraction of the micropore-forming agent (B) at the same time with the oxidation of mercapto groups.

Further, the membrane thus oxidized is preferably rinsed to remove the oxidizing agent from the membrane. Moreover, the membrane thus oxidized may be subjected to acid treatment with hydrochloric acid, sulfuric acid or the like. This acid treatment can be expected to wash impurities or unnecessary metallic ions away from the membrane. The acid treatment is preferably followed by further rinse.

By the way, in the case where as a raw material there is used the sulfonic acid group-containing oligomer (S) instead of the mercapto group-containing oligomer (A), the fourth step can be omitted.

### <Example>

The present invention will be further described hereinafter in the following examples, but the present invention is not limited thereto. By the way, as the compounds, solvents andothermaterials used in the examples and comparative examples except the mercapto group-containing oligomers synthesized in the following synthesis examples there were used commercially available products as they were, and all these compounds were obtained from Wako Pure Chemical Industries, Ltd. unless otherwise specified. Further, the measured physical properties of the proton conducting membranes prepared are results obtained by the following evaluation methods.

### [Evaluation method]

### (1) Evaluation of protonic conductivity

The proton conducting membrane obtained according to the production method of the present invention was set in an electrochemical cell (same as shown in Fig. 3 in the above cited JP-A-2002-184427) in such an arrangement that the proton conducting membrane came in close contact with a platinum plate. To the platinum plate was connected an electrochemical impedance meter (Type 1260, produced by SOLARTRON, INC.) by which the impedance of the proton conducting membrane was then measured at a frequency of from 0.1Hz to 100kHz to evaluate the protonic conductivity of the ionically conducting membrane.

By the way, in the aforementioned measurement, the sample was supported in an electrially-insulated sealed vessel. The cell temperature was varied from room temperature to 160°C by a temperature controller in a water vapor atmosphere (95 to 100%RH). The measurement of protonic conductivity was conducted at each temperature. In the examples of the present invention and the comparative examples, measurements at 80°C and 120°C were shown as typical values. For the measurement at 100°C or more, the interior of the measuring bath was pressed.

### (2) Evaluation of drying

The proton conducting membrane obtained according to the production method of the present invention was dipped in 80°C hot water for 1 hour, and the sample was withdrawn from the hot water, allowed to stand in an oven which had been operated under constant conditions of 120°C and 40%RH for 2 hours, and then evaluated for the presence or absence of membrane shrinkage and the change of properties.

### [Synthesis of mercapto group-containing oligomer]

### [Synthesis Example 1]

11.1 g of 3-mercaptopropyltrimethoxysilane (produced by CHISSO CORPORATION) was dissolved in 6.0 g of methanol, 1.4 g of a 4N hydrochloric acid (prepared from a product of Wako Pure Chemical Industries, Ltd.) was added to the solution, and the mixture was then stirred over a 70°C hot plate for 3 hours. When a cloudy liquid thus obtained was allowed to stand at room temperature, it was then divided into two layers. The upper layer (solvent, hydrochloric acid, unreacted products) was removed, and the oligomer which was the lower layer was then washed twice with methanol. 8.0 g of a mercapto group-containing oligomer (A-1) was obtained.

The molecular weight of the oligomer (A-1) was measured by GPC (Type 8020, produced by Tosoh Corporation), and the polymerization degree of the oligomer (A-1) was found to be 7.5 (molecular weight Mw in styrene equivalence : approx. 2,000).

### [Synthesis Example 2]

5.9 g of 3-mercaptopropyltrimethoxysilane and 4.6 g of tetramethoxysilane were dissolved in 3.5 g of methanol, 0.9 g of a 0.1N hydrochloric acid was added to the solution, and the mixture was then stirred at room temperature for 3 hours. Further, to the mixture was added 0.7 g of a 1% methanol solution of potassium fluoride, and the mixture was then stirred over a 70°C hot plate for 3 hours. The liquid thus obtained was then concentrated under reduced pressure as it was to obtain a mercapto group-containing oligomer (A-2) in the form of a vi scous liquid. The oligomer (A-2) had a polymerization degree of 19 and the molar ratio of mercapto group-containing alkoxysilane (C) to hydrolyzable silyl compound (D) as calculated by Si-nuclear magnetic resonance spectrum was 1: 1, which is almost the same as that of the two materials charged.

### [Synthesis Example 3]

A mercapto group-containing oligomer (A-3) was obtained in the same manner as in Synthesis Example 2 except that 7.9 g of 3-mercaptopropyltrimethoxysilane and 4.2 g of tetramethoxysilane instead of tetramethoxysilane were dissolved in 2.6 g of methanol and 1.0 g of a 0.1N hydrochloric acid was used. The oligomer (A-3) had a polymerization degree of 16 and (C) : (D) was 2 : 1.

### [Synthesis Example 4]

A mercapto group-containing oligomer (A-4) was obtained in the same manner as in Synthesis Example 3 except that 8.8 g of 3-mercaptopropyltrimethoxysilane and 6.3 g of tetraethoxysilane were dissolved in 3.2 g of methanol and the amount of a 0.1N hydrochloric acid was changed to 1.0 g. The oligomer (A-4) had a polymerization degree of 8 and (C) : (D) was 3 : 2.

### [Synthesis Example 5]

A mercapto group-containing oligomer (A-5) was obtained in the same manner as in Synthesis Example 3 except that 5.4 g of 3-mercaptopropylmethyldimethoxy silane (produced by Gelest, Inc.) and 6.3 g of tetraethoxysilane were dissolved in 2.9 g of methanol instead of 3-mercaptopropyltrimethoxysilane and the amount of a 0.1N hydrochloric acid was changed to 0.8 g. The oligomer (A-5) had a polymerization degree of 8 and (C) : (D) was 1 : 1.

### [Synthesis Example 6]

A mercapto group-containing oligomer (A-6) was obtained in the same manner as in Synthesis Example 5 except that 5.3 g of methyltriethoxysilane was used instead of tetramethoxysilane. The oligomer (A-6) had a polymerization degree of 13 and (C) : hydrolyzable silyl compound (E) was 1 : 1.

### [Synthesis Example 7]

A mercapto group-containing oligomer (A-7) was obtained in the same manner as in Synthesis Example 2 except that 8.3 g of octyltriethoxysilane (produced by Gelest, Inc.) was used instead of tetramethoxysilane. The oligomer (A-7) had a polymerization degree of 9 and (C) : (E) was 1 : 1.

### [Synthesis Example 8]

A mercapto group-containing oligomer (A-8) was obtained in the same manner as in Synthesis Example 2 except that 4.4 g of dimethyldiethoxysilane was used instead of tetramethoxysilane. The oligomer (A-8) had a polymerization degree of 18 and (C) : (E) was 1 : 1.

### [Synthesis Example 9]

A mercapto group-containing oligomer (A-9) was obtained in the same manner as in Synthesis Example 4 except that 8.8 g of 3-mercaptopropyltrimethoxysilane, 3.1 g of tetraethoxysilane and 2.7 g ofmethyltriethoxysilane were used. The oligomer (A-9) had a polymerization degree of 10 and (C) : (D) : (E) was 3 : 1 : 1.

### [Synthesis Example 10]

A mercapto group-containing oligomer (A-10) was obtained in the same manner as in Synthesis Example 2 except that 5.0 g of mercaptomethyltrimethoxysilane (produced by Gelest, Inc.) was used instead of 3- meraptopropyltrimethoxysilane and 6.2 g of tetraethoxysilane was used instead of tetramethoxysilane. The oligomer (A-10) had a polymerization degree of 15 and (C) : (E) was 1 : 1.

### [Synthesis Example 11]

X-41-1805 (reference number) (produced by Shin-Etsu Chemical Co., Ltd.), which is a commercially available oligomer, was used as it was to prepare a mercapto group-containing oligomer (A-11). The oligomer (A-11) had a polymerization degree of 18 and (C) : (D) was 2 : 7.

### [Synthesis Example 12]

2.0 g of 3-mercaptopropyltrimethoxysilane, 10.4 g of tetraethoxysilane, 0.9 g of a 0.1N hydrochloric acid and 3.8 g of methanol were mixed, and then stirred at room temperature for 4 hours. Further, to the solution was added 1.2 g of a 1 wt-% methanol solution of potassium fluoride, and the mixture was then stirred over a 70°C hot plate for 2 hours. The solution thus obtained was cooled, concentrated under reduced pressure, and then dissolved in ether to cause the precipitation of potassium fluoride which was then removed, and the residue was then distilled under reduced pressure to obtain a mercapto group-containing oligomer (A-12) in the form of viscous liquid. The oligomer (A-12) had a polymerization degree of 6 and the ratio of mercapto group-containing alkoxysilane (C) to hydrolyzable silyl compound (D) as calculated by Si-nuclear magnetic resonance spectrum was 1 : 5.

The material, polymerization degree and material ratio (C)/((C)+ (D) + (E)) of the mercapto group-containing oligomers (A-1) to (a-12) thus obtained are altogether set forth in Table 1.

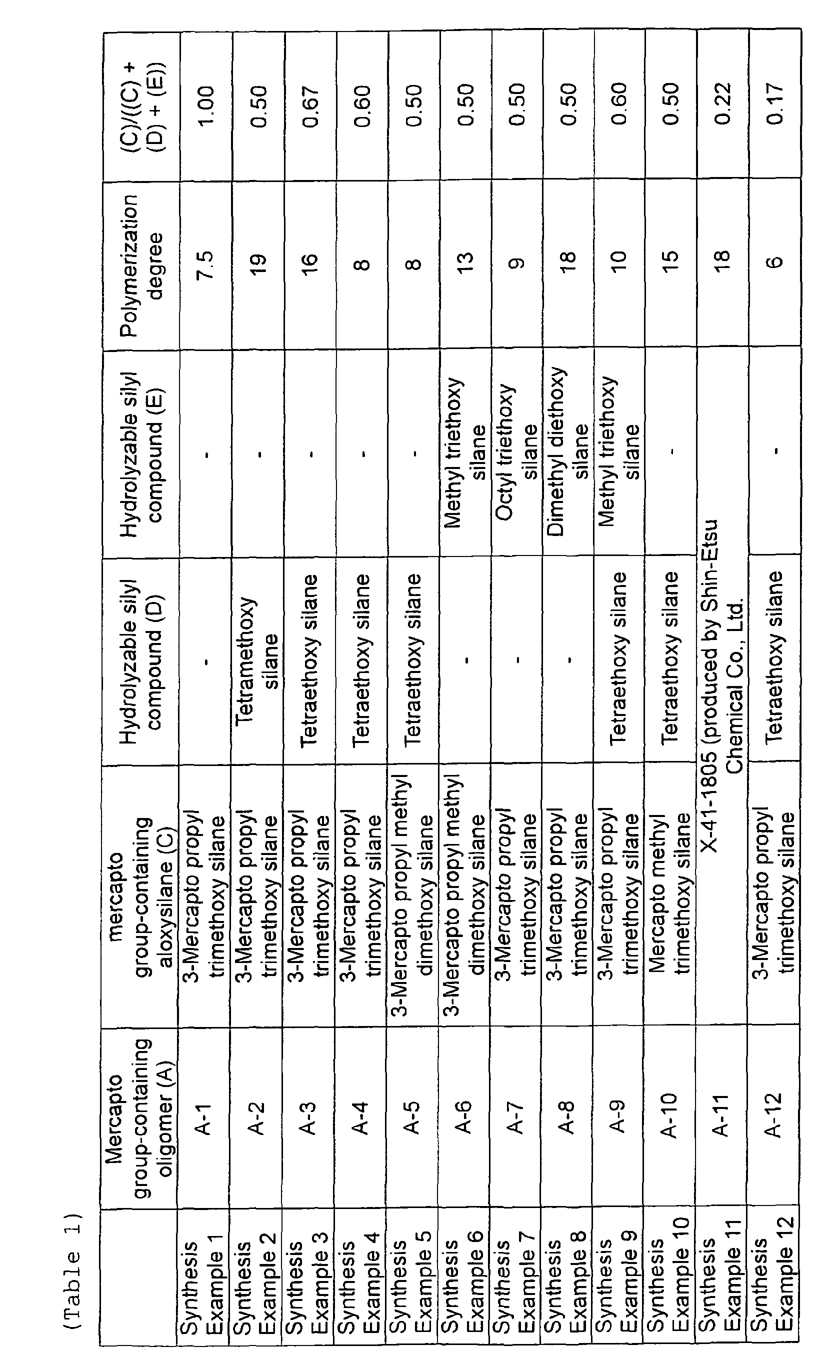

### [Example 1]

### (1) First step

2.0 g of the mercapto group-containing oligomer (A-11) was dissolved in 2 ml of tetrahydrofurane to obtain a rawmaterial solution. Separately, 1.0 g of triethylamine and 0.2 g of water were dissolved in 1 ml of tetrahydrofurane to obtain a catalyst solution. The two solutions were mixed, and then stirred for 60 minutes.

### (2) Second step

The solution obtained at the aforementioned step (1) was casted over a Teflon (trade name) laboratory dish (produced by Horikawa Seisakusho K.K.) having an inner diameter of 8.4 cm which was then allowed to stand on a horizontal table.

### (3) Third step

The solution was allowed to stand at room temperature (20°C) for 120 hours, heated in a 80°C saturated water vapor for 12 hours, and then heated to 150°C for 12 hours to obtain a glassy transparent membrane.

### (4) Fourth step

The membrane obtained at the aforementioned step (3) was dipped in a 1N hydrochloric acid at room temperature for 1 hour, and then dipped in a 80°C distilled water for 12 hours. The membrane thus washed was dipped in a mixture of 12.5 ml of acetic acid and 10 ml of a 30% aqueous solution of hydrogen peroxide where it was then heated to a liquid temperature of 60°C for 1 hour. Thereafter, the membrane was washed with a 80°C distilled water for 3 hours to obtain a proton conducting membrane. The materials and catalysts used and the properties of the membrane are set forth in Table 2 and the results of evaluation of the membrane are set forth in Table 4.

### [Example 2]

A proton conducting membrane was obtained in the same manner as in Example 1 except that a solution of 1.7 g of the mercapto group-containing oligomer (A-11) and 0.1 g of 1,8-bis(ethoxydimethylsilyl)octane (synthesized by the applicant) in 2 ml of tetrahydrofurane was used as a rawmaterial solution. The materials and catalysts used and the properties of the membrane are set forth in Table 2 and the results of evaluation of the membrane are set forth in Table 4.

### [Example 3]

A proton conducting membrane was obtained in the same manner as in Example 1 except that a solution of 1.7 g of the mercapto group-containing oligomer (A-11), 0.1 g of 1,8-bis(ethoxydimethylsilyl)octane and 0.5 g of tetraethylene glycol in 2 ml of tetrahydrofurane was used as a raw material solution and 1.0 g of pyridine was used instead of triethylamine as a catalyst. The tetraethylene glycol was extracted from the membrane by washing, oxidation and washing after oxidation at the fourth step.

The materials and catalysts used and the properties of the membrane are set forth in Table 2 and the results of evaluation of the membrane are set forth in Table 4.

### [Example 4]

A proton conducting membrane was obtained in the same manner as in Example 1 except that a solution of 1.7 g of the mercapto group-containing oligomer (A-11), 0.1 g of 1,8-bis(ethoxydimethylsilyl)octane, 0.5 g of a polyethylene glycol #200 (average molecular weight: 200) and 0.1 g of tetraethoxylsilane in 2 ml of tetrahydrofurane was used as a raw material solution and 1.0 g of N,N-diethylethanolamine was used instead of triethylamine as a catalyst. The materials and catalysts used and the properties of the membrane are set forth in Table 2 and the results of evaluation of the membrane are set forth in Table 4.

### [Example 5]

A proton conducting membrane was obtained in the same manner as in Example 1 except that a solution of 1.7 g of the mercapto group-containing oligomer (A-11), 0.1 g of 1,8-bis(ethoxydimethylsilyl)octane, 0.5 g of a polyethylene glycol #200 (average molecular weight: 200) and 0.1 g of a methylmethoxysiloxane oligomer KR-500 (reference number) (produced by Shin-Etsu Chemical Co., Ltd.) in 2 ml of tetrahydrofurane was used as a raw material solution and 1.0 g of N,N,N',N'-tetraethylenediamine was used instead of triethylamine as a catalyst. The materials and catalysts used and the properties of the membrane are set forth in Table 2 and the results of evaluation of the membrane are set forth in Table 4.

### [Example 6]

### (1) First step

A solution of 1.3 g of the mercapto group-containing oligomer (A-1) and 0.7 g of 1,8-bis(diethoxymethylsilyl)octane (synthesized by the applicant) in 2 ml of isopropanol was used as a rawmaterial solution. A solution of 0.3 g of a 1N hydrochloric acid as a catalyst in 1 ml of isopropanol was used as a catalyst solution. The two solutions were mixed, and then stirred for 1 minute.

### (2) Second step

The mixture was casted over a polystyrene dish (produced by AS ONE CORPORATION) having an inner diameter of 9 cm which was then allowed to stand on a horizontal table.

### (3) Third step

The third and subsequent steps were effected in the same manner as in Example 1 to obtain a proton conducting membrane. The materials and catalysts used and the properties of the membrane are set forth in Table 2 and the results of evaluation of the membrane are set forth in Table 4.

### [Example 7]

A proton conducting membrane was obtained in the same manner as in Example 6 except that a solution of 1.3 g of the mercapto group-containing oligomer (A-1), 0.5 g of 1,8-bis(diethoxymethylsilyl)octane and 0.3 g of tetraethoxysilane in 2 ml of isopropanol was used as a raw material solution. The materials and catalysts used and the properties of the membrane are set forth in Table 2 and the results of evaluation of the membrane are set forth in Table 4.

### [Example 8]

A proton conducting membrane was obtained in the same manner as in Example 6 except that a solution of 1.3 g of the mercapto group-containing oligomer (A-1), 0.5 g of 1,8-bis(diethoxymethylsilyl)octane and 0.3 g of a polydiethoxysiloxane (reference number PSI-021, produced by Gelest, Inc.) in 2 ml of isopropanol was used as a raw material solution. The materials and catalysts used and the properties of the membrane are set forth in Table 2 and the results of evaluation of the membrane are set forth in Table 4.

### [Example 9]

A proton conducting membrane was obtained in the same manner as in Example 6 except that a solution of 1.3 g of the mercapto group-containing oligomer (A-1), 0.5 g of 1, 8-bis (triethoxysilyl) octane (produced by Gelest, Inc.) and 0.5 g of a polyethylene glycol #200 (average molecular weight: 200) in 2 ml of isopropanol was used as a raw material solution. The materials and catalysts used and the properties of the membrane are set forth in Table 2 and the results of evaluation of the membrane are set forth in Table 4.

### [Example 10]

A proton conducting membrane was obtained in the same manner as in Example 1 except that a solution of 1.5 g of the mercapto group-containing oligomer (A-1), 0.5 g of 1,8-bis(diethoxymethylsilyl)octane and 0. 5 g of a polyethylene glycol #200 (average molecular weight: 200) in 2 ml of tetrahydrofurane was used as a raw material solution and 1.0 g of pyridine was used as a catalyst instead of triethylamine. The materials and catalysts used and the properties of the membrane are set forth in Table 2 and the results of evaluation of the membrane are set forth in Table 4.

### [Example 11]

A proton conducting membrane was obtained in the same manner as in Example 1 except that a solution of 1.7 g of the mercapto group-containing oligomer (A-2), 0.1 g of 1,8-bis(ethoxydimethylsilyl)octane and 0.5 g of a polyethylene glycol #200 (average molecular weight: 200) in 2 ml of tetrahydrofurane was used as a raw material solution and 1.0 g of pyridine was used as a catalyst instead of triethylamine. The materials and catalysts used and the properties of the membrane are set forth in Table 2 and the results of evaluation of the membrane are set forth in Table 4.

### [Example 12]

A proton conducting membrane was obtained in the same manner as in Example 1 except that a solution of 1.7 g of the mercapto group-containing oligomer (A-2), 0.1 g of 1,8-bis(ethoxydimethylsilyl)octane, 0.5 g of a polyethylene glycol #200 (average molecular weight: 200) and 0.1 g of tetramethoxysilane in 2 ml of tetrahydrofurane was used as a raw material solution and 1.0 g of N,N,N',N'-tetraethylethylenediamine was used as a catalyst instead of triethylamine. The materials and catalysts used and the properties of the membrane are set forth in Table 3 and the results of evaluation of the membrane are set forth in Table 4.

### [Example 13]

A proton conducting membrane was obtained in the same manner as in Example 1 except that a solution of 1.7 g of the mercapto group-containing oligomer (A-3), 0.1 g of 1,8-bis(ethoxydimethylsilyl)octane, 0.5 g of a polyethylene glycol #200 (average molecular weight: 200) and 0.1 g of tetraethoxysilane in 2 ml of tetrahydrofurane was used as a rawmaterial solution and 1.0 g of pyridine was used as a catalyst instead of triethylamine. The materials and catalysts used and the properties of the membrane are set forth in Table 3 and the results of evaluation of the membrane are set forth in Table 4.

### [Example 14]

A proton conducting membrane was obtained in the same manner as inExample 13 except that the mercapto group-containing oligomer (A-4) was used instead of the mercapto group-containing oligomer (A-3). The materials and catalysts used and the properties of the membrane are set forth in Table 3 and the results of evaluation of the membrane are set forth in Table 4.

### [Example 15]

A proton conducting membrane was obtained in the same manner as in Example 13 except that themercapto group-containing oligomer (A-5) was used insteadof themercapto group-containing oligomer (A-3). The materials and catalysts used and the properties of the membrane are set forth in Table 3 and the results of evaluation of the membrane are set forth in Table 4.

### [Example 16]

A proton conducting membrane was obtained in the same manner as in Example 13 except that the mercapto group-containing oligomer (A-6) was used insteadof the mercap to group-containing oligomer (A-3). The materials and catalysts used and the properties of the membrane are set forth in Table 3 and the results of evaluation of the membrane are set forth in Table 4.

### [Example 17]

A proton conducting membrane was obtained in the same manner as in Example 13 except that themercapto group-containing oligomer (A-7) was used instead of themercapto group-containing oligomer (A-3). The materials and catalysts used and the properties of the membrane are set forth in Table 3 and the results of evaluation of the membrane are set forth in Table 4.

### [Example 18]

A proton conducting membrane was obtained in the same manner as in Example 13 except that themercapto group-containing oligomer (A-8) was used instead of the mercapto group-containing oligomer (A-3). The materials and catalysts used and the properties of the membrane are set forth in Table 3 and the results of evaluation of the membrane are set forth in Table 4.

### [Example 19]

A proton conducting membrane was obtained in the same manner as in Example 13 except that themercapto group-containing oligomer (A-9) was used instead of themercapto group-containing oligomer (A-3). The materials and catalysts used and the properties of the membrane are set forth in Table 3 and the results of evaluation of the membrane are set forth in Table 4.

### [Example 20]

A proton conducting membrane was obtained in the same manner as in Example 13 except that themercapto group-containing oligomer (A-10) was used instead of the mercapto group-containing oligomer (A-3). The materials and catalysts used and the properties of the membrane are set forth in Table 3 and the results of evaluation of the membrane are set forth in Table 4.

### [Example 21]

In Example 3, the mixture obtained at the first step was casted over a Teflon (trade name) sheet at the second step, a porous fluororesin membrane (Membrane filter JG, produced by Millipore Corporation) was put on the material thus casted, a Teflon (trade name) sheet was put on the porous membrane, and the laminate was then subjected to impregnation by a roll press method. The pickup was adjusted to 50 g/m².

The subsequent treatments were effected in the same manner as in Example 3 to obtain a proton conducting membrane. The materials and catalysts used and the properties of the membrane are set forth in Table 3 and the results of evaluation of the membrane are set forth in Table 4.

Further, the membrane thus obtained was put interposed between two sheets of gas diffusion electodes (0.5 mg platinum-loaded product produced by E-TEK Co., Ltd.), and the laminate was then disposed in a single cell (membrane area: 5.25 cm²; produced by Electrochem Co., Ltd.). In the single cell fuel cell thus prepared, hydrogen was introduced into the anode side while oxygen was introduced into the cathode side. Hydrogen was passed through a water bubbler the temperature of which was adjusted to that of the cell to undergo moistening. The voltage-current curve obtained at 80°C with an electronic load connected to the output of the cell is shown in Fig. 1.

### [Example 22]

### (1) First step

2.0 g of the mercapto group-containing oligomer (A-11) was dissolved in a mixture of 8.0 g of isopropanol, 1.0 g of acetic acid and 1.0 g of a 30% aqueous solution of hydrogen peroxide, and the solution was then stirred at room temperature for 2 hours and at 80°C for 3 hours. To a viscous solution thus obtained was added 0.6 g of tetraethoxysilane as it was, and the mixture was then stirred at room temperature for 10 minutes.

### (2) Second step

The solution obtained at the aforementioned step (1) was casted over a Teflon (trade name) laboratory dish (produced by Horikawa Seisakusho K.K.) having an inner diameter of 8.4 cm which was then allowed to stand on a horizontal table.

### (3) Third step

The solution was allowed to stand at room temperature (20°C) for 120 hours, heated in a 80°C saturated water vapor for 12 hours, and then heated to 150°C for 12 hours to obtain a glassy transparent membrane. The membrane thus obtained was washed with a 80°C distilled water for 3 hours to obtain a proton conducting membrane. The materials and catalysts used and the properties of the membrane are set forth in Table 3 and the results of evaluation of the membrane are set forth in Table 4.

### [Example 23]

A proton conducting membrane was obtained in the same manner as in Example 22 except that to the solution prepared at the first step in Example 22 was added 0.5 g of a polyethylene glycol #200 (average molecular weight: 200). The materials and catalysts used and the properties of the membrane are set forth in Table 3 and the results of evaluation of the membrane are set forth in Table 4.

### [Example 24]

A proton conducting membrane was obtained in the same manner as in Example 1 except that a solution of 1.7 g of the mercapto group-containing oligomer (A-11), 0.5 g of tetraethoxysilane and 0.5 g of tetraethylene glycol #200 (average molecular weight: 200) in 2 ml of tetrahydrofurane was used as a raw material solution.

The materials and catalysts used and the properties of the membrane are set forth in Table 3 and the results of evaluation of the membrane are set forth in Table 4.

### [Example 25]

### (1) First step

0.54 g of the mercapto group-containing oligomer (A-12), 0.17 g of tetraethoxysilane, 0.1 g of a polyethylene glycol (#200), 0.21 g of water, 0.53 g of triethylamine, 0.3 g of methanol, 0.08 g of a 1 wt-% methanol solution of potassium fluoride and 0.5 g of tetrahydrofurane were mixed with stirring at room temperature for 1 minute.

### (2) Second step

The solution obtained at the aforementioned step (1) was casted over a Teflon (trade name) laboratory dish having an inner diameter of 8.4 cm which was then allowed to stand on a horizontal table.

### (3) Third step

The solution was allowed to stand at room temperature (20°C) for 200 hours, and then put in a 150°C oven in which the air within had been replaced by nitrogen. The temperature of the oven was raised at a rate of 20°C/min to 270°C at which the solution was then heated for 5 hours to obtain a glassy transparent membrane.

### (4) Fourth step

The membrane obtained at the aforementioned step (3) was dipped in a 1N hydrochloric acid at room temperature for 1 hour, and then dipped in a 80°C distilled water for 12 hours. The membrane thus washed was dipped in a mixture of 12. 5 ml of acetic acid and 10 ml of a 30% aqueous solution of hydrogen peroxide where it was then heated to a liquid temperature of 60°C for 1 hour. Thereafter, the membrane was washed with a 80°C distilled water for 3 hours to obtain a proton conducting membrane. The materials and catalysts used and the properties of the membrane are set forth in Table 3 and the results of evaluation of the membrane are set forth in Table 4.

### [Example 26]

### (1) First step

4.37 g of the mercapto group-containing oligomer (A-11), 0.51 g of tetraethoxysilane, 0.14 g of a polyethylene glycol (#200), 0.14 g of water, 0.05 g of triethylamine and 0.1 g of methanol were mixed with stirring at room temperature for 20 minutes.

### (2) Second step

At the second step, the solution obtained at the aforementioned first step was casted over a Teflon (trade name) sheet, a porous fluororesinmembrane (Membrane filter JGWP14225, produced by Millipore Corporation) was put on the material thus casted, a Teflon (tradename) sheet was put on the porous membrane, and the laminate was then subjected to impregnation by a roll press method. The pickup was adjusted to 50 g/m².

### (3) Third step

One of the Teflon covers was removed, and the laminate was allowed to stand in a 30°C-98% constant temperature-constant humidity bath for 15 hours, heated in a 130°C saturated water vapor in an autoclave for 20 hours, dried in a 140°C oven, and then heated in a 270°C oven for 4 hours to obtain a flexible cloudy membrane.

### (4) Fourth step

The membrane obtained at the aforementioned step (3) was dipped in a mixture of 12.5 ml of acetic acid and 10 ml of a 30% aqueous solution of hydrogen peroxide where it was then heated to a liquid temperature of 60°C for 1 hour. Thereafter, the membrane was washed with a 80°C distilled water for 1 hour, and then dried under reduced pressure for 30 minutes to obtain a proton conducting membrane. The materials and catalysts used and the properties of the membrane are set forth in Table 3 and the results of evaluation of the membrane are set forth in Table 4.

### [Comparative Example 1]

A membrane was obtained in the same manner as in Example 13 except that a 3-mercaptopropyltrimethoxy silane was used instead of the mercapto group-containing oligomer (A-3). The materials and catalysts used and the properties of the membrane are set forth in Table 3 and the results of evaluation of the membrane are set forth in Table 4.

The membrane obtained at the third step was extremely brittle and thus could be difficultly handled. Further, when subjected to treatment at the fourth step, the membrane became powdery and thus could not be evaluated for conductivity, etc.

### [Comparative Example 2]

Nafion 112 (trade name), which is a commercially available electrolytic membrane, was used as it was. The properties of the membrane are set forth in Table 3 and the results of evaluation of the membrane are set forth in Table 4.

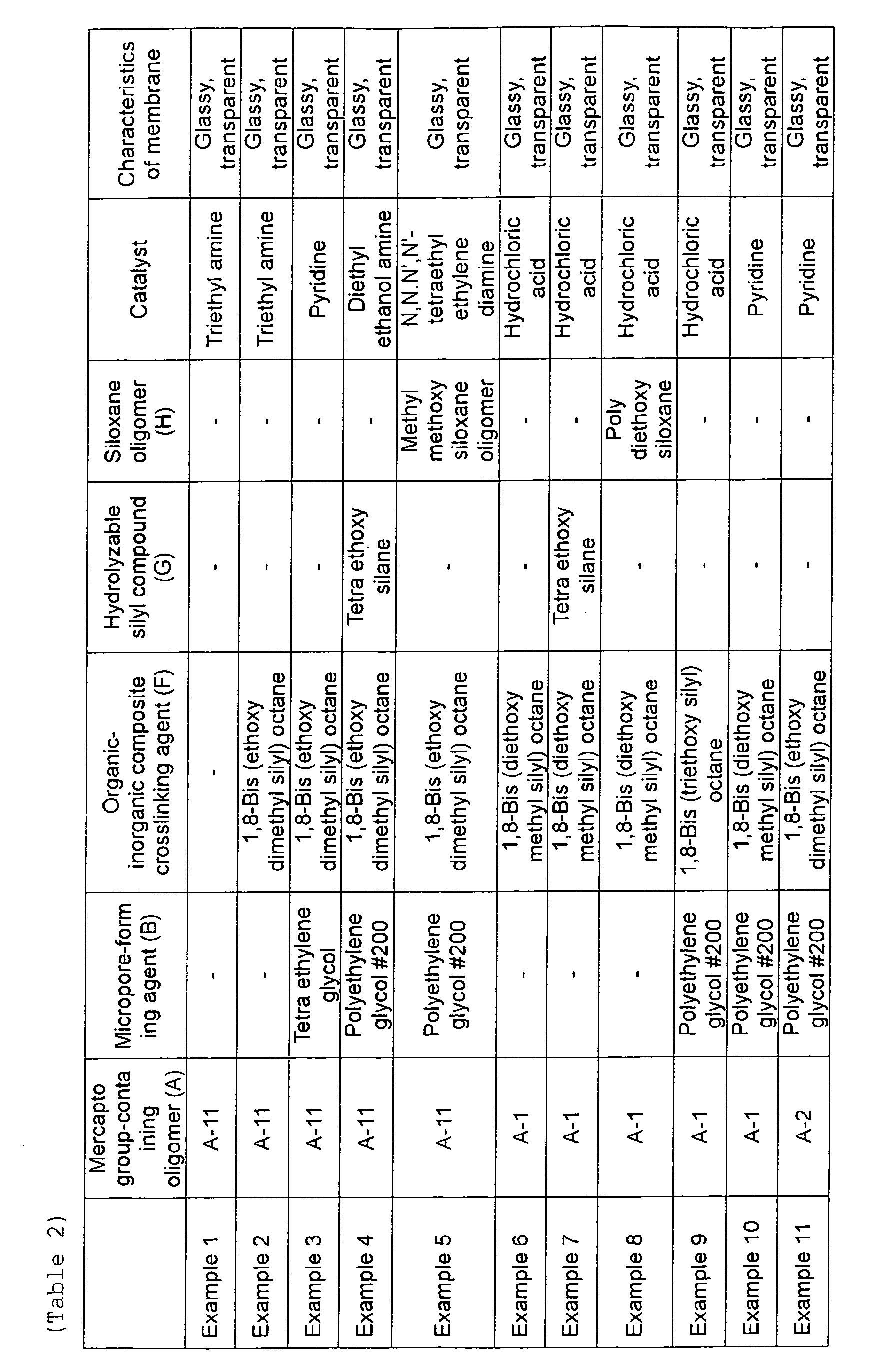

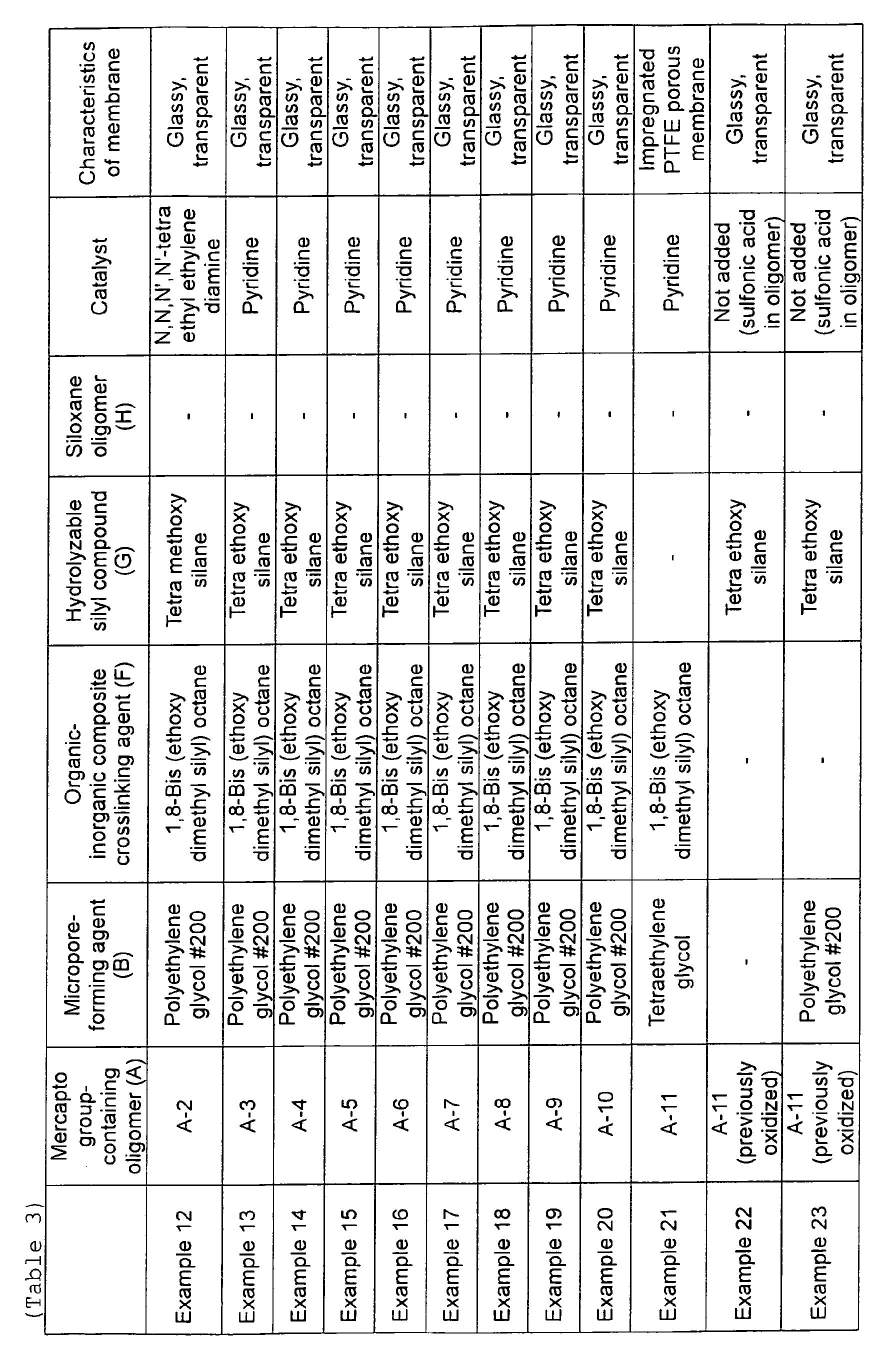

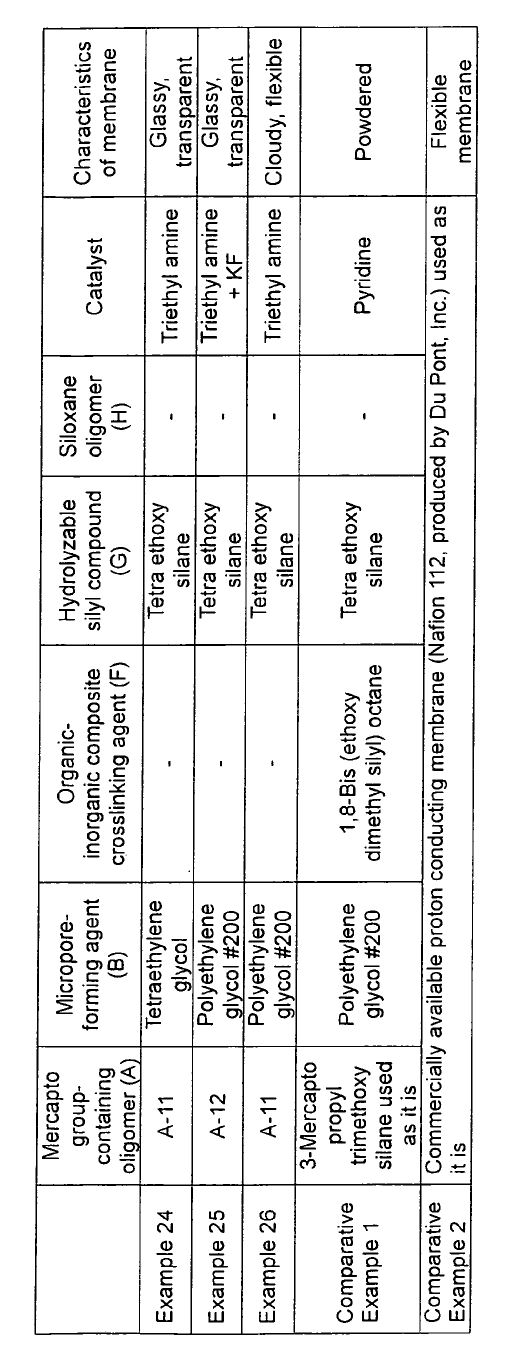

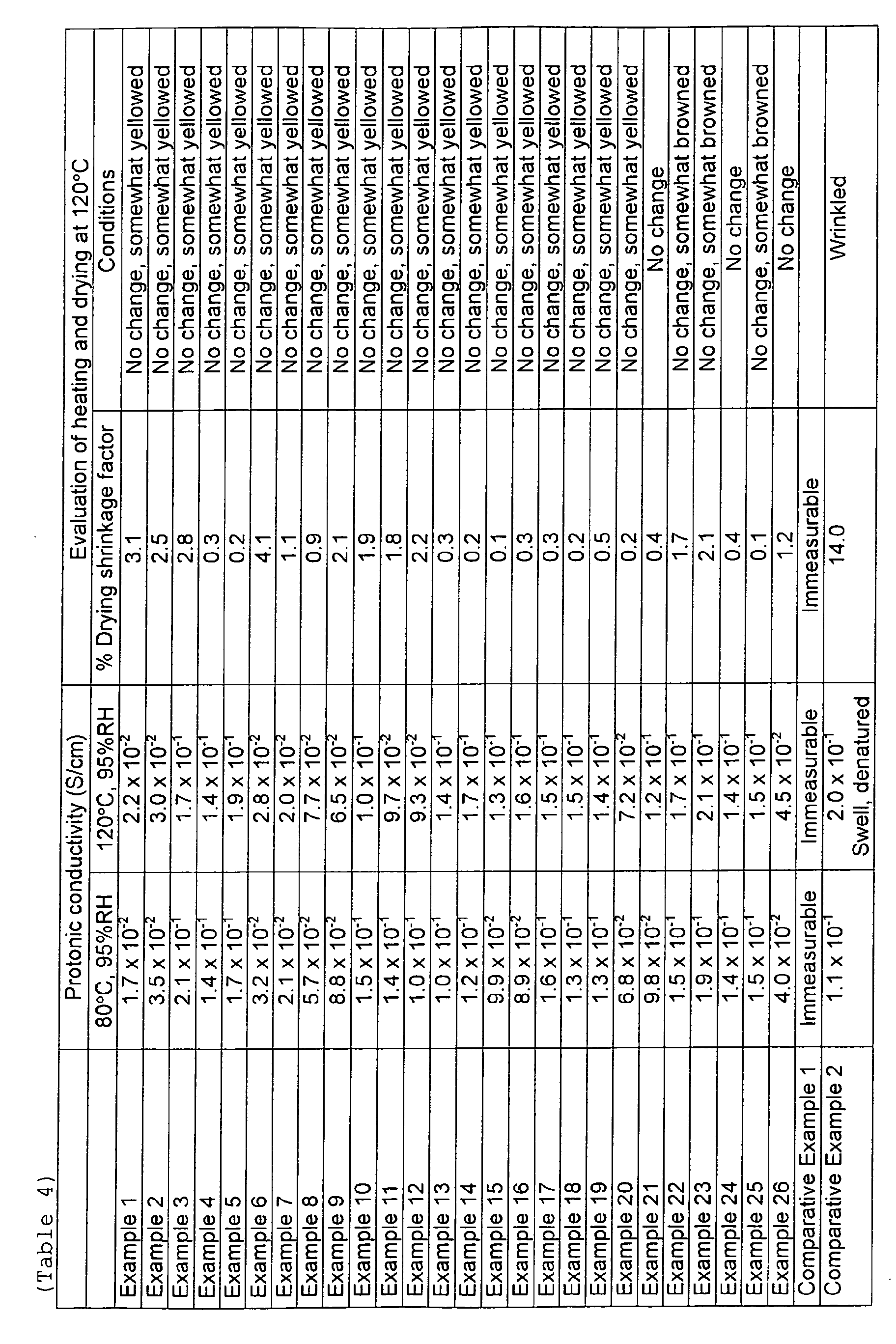

As shown in Examples 1 to 26 in Tables 2 to 4, the use of the mercapto group-containing oligomer (A) (Examples 1 to 21, Examples 24 to 26) or the sulfonic acid group-containing oligomer (S), which had been obtained by oxidizing at least 20 atom-% of mercapto groups in the mercapto group-containing oligomer (A) to sulfonic acid, (Examples 22 and 23, fourth step omitted) instead of the mercapto group-containing oligomer (A) made it possible to obtain an electrolytic membrane. It is obvious that great improvements were made as compared with the case where the same membrane is formed without passing through oligomer as in Comparative Example 1. Further, all the membranes thus obtained showed a conductivity as high as more than 10⁻² S/cm, and in particular, when the micropore-forming agent (B) was used (Examples 3 to 5, 9 to 20, 24, 25) or the sulfonic acid group-containing oligomer (S) was used (Examples 22 and23) , a conductivity as high as about 10⁻¹ S/cmwas realized.

Further, all the membranes had a good heat resistance and showed no great apparent change and little drying shrinkage even at 120°C. On the other hand, Nafion of Comparative Example 2 showed much drying shrinkage and, when measured for conductivity at 120°C, showed a very good conductivity but underwentmuch swelling from which it didn't returned to original state even after drying and further underwent embrittlement.

Moreover, complexing to a porous fluororesin membrane, etc. can be made (Examples 21, 26) to obtain a flexible membrane without causing a drastic drop of conductivity or heat resistance. The membranes complexed to porous fluororesin membrane also showed good electricity-generation properties.

### <Industrial Applicability>

The proton conducting membrane of the present invention has a high conductivity and an excellent high temperature dimensional stability and can make stable performance even at high temperatures, making it possible to raise the operating temperature of polymer solid electrolytic fuel cell, which has been recently noted, to 100°C or more, and as a result, the enhancement of electricity-generating efficiency and the elimination of CO poisoning of catalyst can be realized.

The use of this proton conducting membrane makes it possible to exert an effect of providing a solid polymer type fuel cell capable of coping with high temperature operation or direct fuel supply (e.g., methanol).

## Claims

1. Amethod for producing a proton conducting membrane having a crosslinked structure formed by a silicon-oxygen covalent bond and having a sulfonic acid-containing crosslinked structure represented by the following formula (1) therein, which comprises a first step of preparing a mixture containing a mercapto group-containing oligomer (A) having a mercapto group and a reactive group which can form a Si-O-Si bond by condensation reaction, a second step of forming said mixture into a membrane, a third step of subjecting said membrane-like material to condensation reaction in the presence of a catalyst to obtain a crosslinked gel and a fourth step of oxidizing the mercapto group in the membrane so that it is converted to a sulfonic acid group: 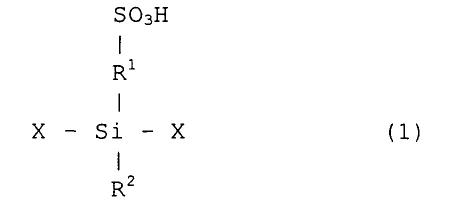 wherein X represents -O- bond taking part in crosslinking or OH group; R¹ represents an alkylene group having 20 or less carbon atoms; R² represents any of CH₃, C₂H₅, C₃H₇, C₄H₉, C₆H₅, OH and -O- bond taking part in crosslinking; and R¹ and R² each may be mixture of different substituents.

2. The method for producing a proton conducting membrane as described in Claim 1, wherein the mercapto group-containing oligomer (A) has a plurality of mercapto groups.

3. The method for producing a proton conducting membrane as described in Claim 1, wherein the mercapto group-containing oligomer (A) is a compound represented by the following formula (5) : 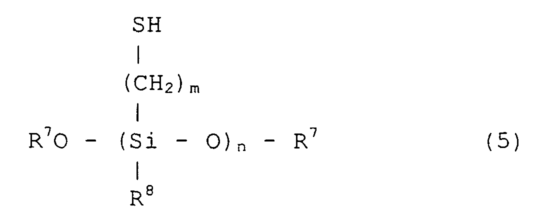 wherein R⁷ represents a group selected from the group consisting of H, CH₃, C₂H₅, C₃H₇ and C₄H₉; R⁸ represents a group selected from the group consisting of CH₃, C₂H₅, C₃H₇, C₄H₉, C₆H₅, OH, OCH₃, OC₂H₅, OC₃H₇ and OC₄H₉; m represents an integer of from 1 to 20; n represents an integer of from 2 to 100; R⁸ may be a mixture of the same or different substituents; and R⁸ may have a branched structure which is partially a -OSi bond or an intramolecular annular structure.

4. The method for producing a proton conducting membrane as described in Claim 3, wherein in the formula (5), R⁸ is any of OH, OCH₃, OC₂H₅ and O-Si bond, m is 3 and n is an integer of from 3 to 50.

5. The method for producing a proton conducting membrane as described in Claim 1, wherein the mercapto group-containing oligomer (A) is a compound represented by the following formula (6) : 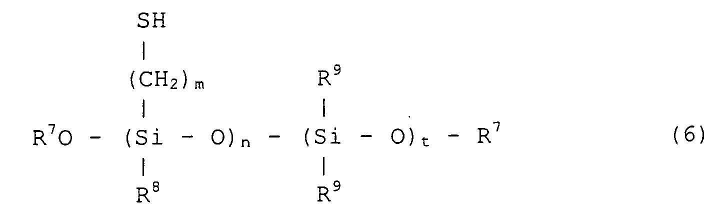 wherein R⁷ represents a group selected from the group consisting of H, CH₃, C₂H₅, C₃H₇ and C₄H₉; R⁸ represents a group selected from the group consisting of CH₃, C₂H₅, C₃H₇, C₄H₉, C₆H₅, OH, OCH₃, OC₂H₅, OC₃H₇ and OC₄H₉; R⁹ represents a group selected from the group consisting of OH, OCH₃, OC₂H₅, OC₃H₇, OC₄H₉, CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅; m represents an integer of from 1 to 20; n represents an integer of from 1 to 100; t represents an integer of from 1 to 100; R⁸ and R⁹ each may be a mixture of the same or different substituents; R⁸ and R⁹ each may be a branched structure which is partially a -OSi bond or an annular structure; and the unit containing a mercapto group and the unit containing R⁹ may exist in block or random form.

6. The method for producing a proton conducting membrane as described in Claim 5, wherein in the formula (6), n represents an integer of from 2 to 100.

7. The method for producing a proton conducting membrane as described in Claim 5, wherein in the formula (6), R⁸ represents any of OH, OCH₃, OC₂H₅ and O-Si bond, R⁹ represents any of OH, OCH₃, OC₂H₅ and O-Si bond, m is 3, and the sum of n and t is an integer of from not smaller than 3 to not greater than 50.

8. The method for producing a proton conducting membrane as described in Claim 1, wherein the mercapto group-containing oligomer (A) is produced by the hydrolytic condensation of a composition containing a mercapto group-containing alkoxysilane (C) represented by the following chemical formula (2):
(R³)ₜ(R⁴)ₘSi-(CH₂)ₙ-SH (2)
wherein R³ represents a group selected from the group consisting of CH₃, C₂H₅, C₃H₇, C₄H₉ and C₆H₅; R⁴ is a group selected from the group consisting of OCH₃, OC₂H₅, OC₃H₇ and OC₄H₉; t represents an integer of 0 or 1; m represents an integer of 2 or 3; the sum of m and t is 3; and n represents an integer of from 1 to 20.

9. The method for producing a proton conducting membrane as described in Claim 8, wherein in the formula (2), R⁴ represents OCH₃ or OC₂H₅, t is 0, and m is 3.

10. The method for producing a proton conducting membrane as described in Claim 8, wherein in the formula (2), R³ represents CH₃, R⁴ represents OCH₃ or OC₂H₅, t is 1, and m is 2.

11. The method for producing a proton conducting membrane as described in Claim 8, wherein in the formula (2), n is 3.

12. The method for producing a proton conducting membrane as described in Claim 5, wherein the starting material composition of the mercapto group- containing oligomer (A) further contains at least one hydrolyzable silyl compound (D) represented by the following chemical formula (3):
Si(R⁵)₄ (3)
wherein R⁵ represents a group selected from the group consisting of Cl, OH, OCH₃, OC₂H₅, OC₃H₇, OC₄H₉ and OCOCH₃.

13. The method for producing a proton conducting membrane as described in Claim 12, wherein in the formula (3), R⁵ is any of OCH₃ and OC₂H₅.

14. The method for producing a proton conducting membrane as described in Claim 5, wherein the starting material composition of the mercapto group- containing oligomer (A) further contains at least one hydrolyzable silyl compound (E) represented by the following chemical formula (4):
(R⁵)ₘ(R⁶)ₙSi (4)
wherein R⁵ represents a group selected from the group consisting of Cl, OH, OCH₃, OC₂H₅, OC₃H₇, OC₄H₉ and OCOCH₃, R⁶ represents a group selected from the group consisting of CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅, m represents an integer of 2 or 3; and n represents an integer or 1 or 2, with the proviso that the sum of m and n is 4.

15. The method for producing a proton conducting membrane as described in Claim 1, wherein the first step further involves the blending of at least one hydrolyzable silyl compound (G) represented by the following formula (9):
(R⁵)ₘ(R⁶)ₙSi (9)
wherein R⁵ represents a group selected from the group consisting of Cl, OH, OCH₃, OC₂H₅, OC₃H₇, OC₄H₉ and OCOCH₃, R⁶ represents a group selected from the group consisting of CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅, m represents an integer of from 1 to 4; and n represents an integer or from 0 to 3, with the proviso that the sum of m and n is 4.

16. The method for producing a proton conducting membrane as described in Claim 15, wherein in the formula (9), R⁵ represents OCH₃ or OC₂H₅, R⁶ represents CH₃, m represents an integer of 3 or 4, and n represents an integer of 0 or 1, with the proviso that the sum of m and n is 4.

17. The method for producing a proton conducting membrane as described in Claim 15, wherein in the formula (9), R⁵ represents OCH₃ or OC₂H₅, m is 4, and n is 0.

18. The method for producing a proton conducting membrane as described in Claim 1, wherein the first step further involves the blending of at least one siloxane oligomer (H) represented by the following formula (10): 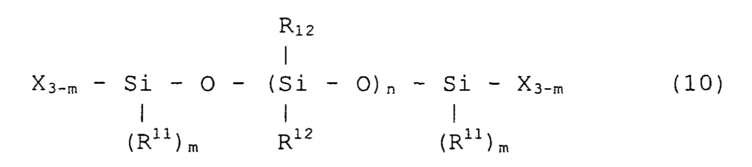 wherein X represents a group selected from the group consisting of Cl, OCH₃, OC₂H₅, OC₃H₇, OC₄H₉, OH and OCOCH₃; R¹¹ represents a group selected from the group consisting of CH₃, C₂H₅, C₃H₇, C₄H₉ and C₆H₅; R¹² represents a group selected from the group consisting of Cl, OH, OCH₃, OC₂H₅, OC₃H₇, OC₄H₉, OCOCH₃, CH₃, C₂H₅, C₃H₇, C₄H₉, C₆H₁₃, C₈H₁₇, C₁₁H₂₃, C₁₂H₂₅, C₁₆H₃₃, C₁₈H₃₇ and C₆H₅; R¹² may be a mixture of the same or different substituents; R¹² may have a branched structure which is partially a -OSi bond or an intramolecular annular structure; m represents an integer of from 0 to 2; and n represents an integer of from 1 to 100.

19. The method for producing a proton conducting membrane as described in Claim 1, wherein the first step further involves the blending of at least one organic-inorganic composite crosslinking agent (F) represented by the following formula (7) : 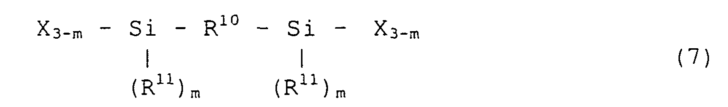 wherein X represents a group selected from the group consisting of Cl, OCH₃, OC₂H₅, OC₃H₇, OC₄H₉ and OH; R¹⁰ represents a C₁-C₃₀ carbon atom-containing molecular chain group; R¹¹ represents a group selected from the group consisting of CH₃, C₂H₅, C₃H₇, C₄H₉ and C₆H₅; and m represents an integer of 0, 1 or 2.

20. The method for producing a proton conducting membrane as described in Claim 19, wherein in the formula (7), X represents OCH₃ or OC₂H₅, R¹⁰ represents an alkylene chain represented by the following formula (8), and R¹¹ represents CH₃:
- (CH₂)ₙ - (8)
wherein n represents an integer of from 1 to 30.

21. The method for producing a proton conducting membrane as described in any one of Claims 15 to 20, wherein the total added amount of at least one compound selected from the group consisting of organic-inorganic composite crosslinking agent (F), hydrolyzable metal compound (G) and siloxane oligomer (H) is 200 parts by weight or less based on 100 parts by weight of the mercapto group-containing oligomer (A).

22. The method for producing a proton conducting membrane as described in Claim 1, wherein at the third step, the catalyst is a Bronsted acid.

23. The method for producing a proton conducting membrane as described in Claim 1, wherein at the third step, the catalyst is a basic catalyst.

24. The method for producing a proton conducting membrane as described in Claim 23, wherein the basic catalyst is an organic amine.

25. The method for producing a proton conducting membrane as described in Claim 24, wherein the organic amine is at least one compound selected from the group consisting of triethylamine, dipropylamine, isobutylamine, diethylamine, diethylethanolamine, triethanolamine, pyridine and piperazine.

26. The method for producing a proton conducting membrane as described in any one of Claims 22 to 25, wherein at the third step, as the catalyst there is additionally used at least one compound selected from the group consisting of potassium fluoride and ammonium fluoride.

27. The method for producing a proton conducting membrane as described in Claim 1, wherein the first step further involves the blending of an oxidatively degradable, water-soluble or hydrolyzable micropore-forming agent (B) and the third step is followed by a step of removing the micropore-forming agent (B) from the membrane-like gel by oxidative degradation, dissolution or hydrolysis to form micropores in the surface and interior of the membrane.

28. The method for producing a proton conducting membrane as described in Claim 27, wherein the micropore-forming agent (B) is a liquid water-soluble organic compound.

29. The method for producing a proton conducting membrane as described in Claim 28, wherein the micropore-forming agent (B) is a polyoxyalkylene.

30. The method for producing a proton conducting membrane as described in Claim 29, wherein the micropore-forming agent (B) is a polyethylene glycol having an average molecular weight of from 100 to 600.

31. The method for producing a proton conducting membrane as described in Claim 27, wherein the blended amount of the micropore-forming agent (B) is from 3 to 150 parts by weight based on 100 parts by weight of the mercapto group-containing oligomer (A).

32. The method for producing a proton conducting membrane as described in Claim 27, wherein the step of removing the micropore-forming agent (B) from the membrane-like gel by oxidative degradation, dissolution or hydrolysis is effected at the same time with the fourth step.

33. Amethod for producing a proton conducting membrane having a crosslinked structure formed by a silicon-oxygen covalent bond and having a sulfonic acid-containing crosslinked structure represented by the following formula (1) therein, which comprises a first step of oxidizing a mercapto group-containing oligomer (A) having a mercapto group and a reactive group which can form a Si-O-Si bond by condensation reaction to prepare a mixture containing a sulfonic acid group-containing oligomer (S) having at least 20 atom-% of mercapto groups in the mercapto group-containing oligomer (A) oxidized to sulfonic acid, a second step of forming said mixture into a membrane and a third step of subjecting said membrane-like material to condensation reaction in the presence of a catalyst to obtain a crosslinked gel: 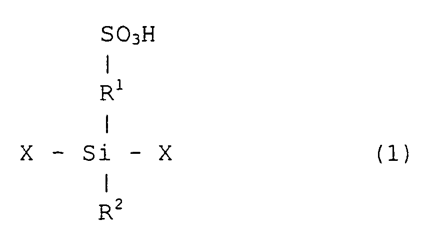 wherein X represents -O- bond taking part in crosslinking or OH group; R¹ represents an alkylene group having 20 or less carbon atoms; R² represents any of CH₃, C₂H₅, C₃H₇, C₆H₅, OH and -O- bond taking part in crosslinking; and R¹ and R² each may be mixture of different substituents.

34. The method for producing a proton conducting membrane as described in Claim 33, wherein the total added amount of at least one compound selected from the group consisting of organic-inorganic composite crosslinking agent (F), hydrolyzable metal compound (G) and siloxane oligomer (H) is 200 parts or less by weight based on 100 parts by weight of the sulfonic acid group-containing oligomer (S).

35. A proton conducting membrane obtained by a production process as described in any one of Claims 1 to 34.

36. A fuel cell comprising a proton conducting membrane as described in Claim 35.
